(19) Europäisches Patentamt / European Patent Office / Office européen des brevets

(11) **EP 2 582 138 A1**

(12) **EUROPEAN PATENT APPLICATION**
published in accordance with Art. 153(4) EPC

(43) Date of publication:
**17.04.2013 Bulletin 2013/16**

(51) Int Cl.:
**H04N 7/32** *(2006.01)*

(21) Application number: **11792321.9**

(22) Date of filing: **31.05.2011**

(86) International application number:
**PCT/JP2011/062453**

(87) International publication number:
**WO 2011/155364 (15.12.2011 Gazette 2011/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.06.2010 JP 2010131890**

(71) Applicant: **Sony Corporation
Tokyo 108-0075 (JP)**

(72) Inventor: **KONDO, Kenji
Tokyo 108-0075 (JP)**

(74) Representative: **Ealey, Douglas Ralph
D Young & Co LLP
120 Holborn
London EC1N 2DY (GB)**

(54) **IMAGE DECODER APPARATUS, IMAGE ENCODER APPARATUS AND METHOD AND PROGRAM THEREOF**

(57) A first decoding processing unit 521 obtains a difference motion vector by performing decoding of an encoded stream. A second decoding processing unit 522 obtains prediction motion vector selecting information by decoding the encoded stream. A motion vector selecting unit 525 sets candidates of the prediction motion vector as to the block to be decoded, and selects a motion vector indicated in prediction motion vector selecting information, from prediction motion vector candidates,; and an adding unit 526 calculates a motion vector of the block to be decoded by adding the difference motion vector to the prediction motion vector. The prediction motion vector is optimized, thereby improving encoding efficiency and image quality.

FIG. 12

**Description**

Technical Field

The present invention relates to an image decoding device, an image encoding device and the method thereof and a program. More specifically, improvement of encoding efficiency and image quality will be realized by performing optimization of prediction motion vector.

Background Art

In recent years, there has come into widespread use devices which handle image information as digital in order to perform highly effective information transmission and storage at that time, for example, compliant to formats such as MPEG or the like to compress the image by orthogonal transform such as discrete cosine transform or the like and motion compensation, both in broadcasting and general households.

In particular, MPEG2 (ISO / IEC 13818-2) is defined as a general-purpose image encoding format, and has widely been employed now by a broad range of applications for professional usage and for consumer usage. By employing the MPEG2 compression format, a code amount (bit rate) of 4 through 8 Mbps is allocated in the event of an interlaced scanning image of standard resolution having 720 x 480 pixels, for example, whereby excellent image quality can be realized. Also, a code amount (bit rate) of 18 through 22 Mbps is allocated in the event of an interlaced scanning image of high resolution having 1920 x 1088 pixels, whereby excellent image quality can be realized.

With MPEG2, high image quality encoding adapted to broadcasting usage is a principal object, but does not handle a lower code amount (bit rate) than the code amount of MPEG1, i.e., an encoding format having a higher compression rate. According to the spread of personal digital assistants, it has been expected that needs for such an encoding format will increase from now on, and in response to this, standardization of the MPEG4 encoding format has been performed. With regard to an image encoding format, the specification thereof was confirmed as international standard as ISO/IEC 14496-2 in December in 1998.

Further, in recent years, standardization of a standard called H.26 (ITU-T Q6/16 VCEG) has progressed, originally intended for image encoding for videoconferencing usage. With H.26L, it has been known that as compared to a conventional encoding format such as MPEG2 or MPEG4, though greater computation amount is required for encoding and decoding thereof, higher encoding efficiency is realized. Also, currently, as part of activity of MPEG4, standardization based on this H.26L, to realize higher encoding efficiency, is being performed as Joint Model of Enhanced-Compression Video Coding. As for the schedule of standardization, this has been made an international Standard called H.264 and MPEG-4 Part 10 (Advanced Video Coding, hereinafter written as H.264/AVC) by March of 2003.

Also, with the H.264/AVC format, the calculating amount is enormous because search of motion vectors is performed in each of multiple block sizes, and accordingly processing time is increased and higher processing capability is required to the computing circuit. Thus, an invention according to PTL 1 has been made so as to shorten processing time at the time of searching motion vector and reduce computing amount, by using a median of motion vectors of adjacent blocks as a prediction motion vector.

Citation List

Patent Literature

PTL 1: Japanese Unexamined Patent Application Publication No. 2006-025033

Summary of Invention

Technical Problem

Incidentally, with encoding of image data, reduction of encoding amount is performed by taking difference between a motion vector and a prediction motion vector of a block to be encoded, and encoding the difference motion vector thereof and including this in stream information. Here, in the event of using a middle value (median) of motion vectors in adjacent blocks as a prediction motion vector, such as with the H.264/AVC format, the median is not necessarily an optimal prediction motion vector.

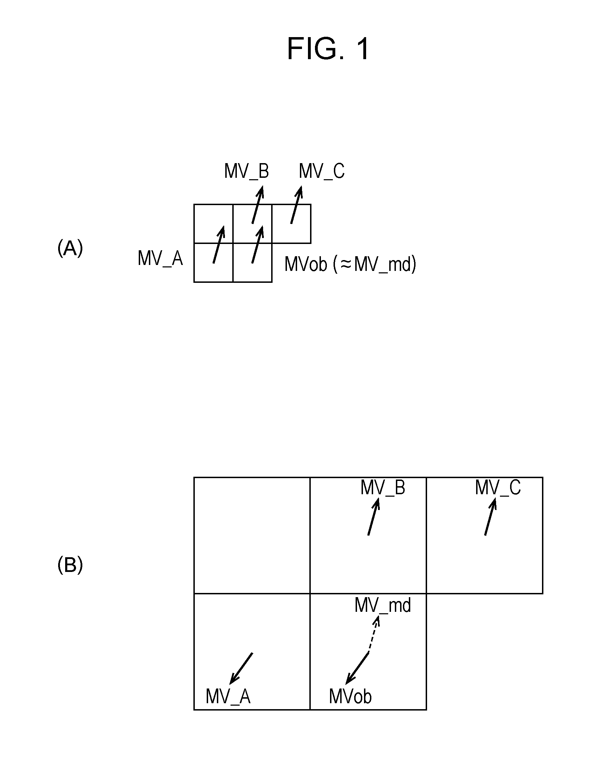

Fig. 1 is a diagram to illustrate a conventional deciding method of a prediction motion vector. Note that, of adjacent blocks adjacent to a block to be encoded, with an encoded block where encoding processing has been already performed at the time of the block to be encoded being subjected to encoding processing, a motion vector of the adjacent block on the left side, for example, will be called motion vector MV_A. Also, the motion vectors of the adjacent blocks on the upper side and upper-right side will be called motion vectors MV_B and MV_C, respectively.

As shown (A) in Fig. 1, in the event of the prediction block size (motion compensation block size) being small, there are many cases where there is little difference between motion vector MVob of the block to be encoded and motion vectors MV_A, MV_B, and MV_C of the adjacent blocks. That is to say, prediction precision is higher when the middle value MV_md is used. On the contrary, as shown (B) in Fig. 1, in the event of the prediction block size being large, the adjacent blocks include regions farther away from the block to be encoded. Accordingly, a case occurs where there is a large difference between the middle value MV_md and the motion vector MVob of the block to be encoded, which will lead to deterioration of the prediction precision, as compared with the case where the prediction block size is smaller.

Accordingly, an object of the present invention is to provide an image decoding device, an image encoding device and the method thereof, and a program which can realize improvement of encoding efficiency and image quality by performing optimization of the prediction motion vector.

Solution to Problem

A first aspect of the present invention is an image decoding device including: a first decoding processing unit configured to obtain a difference motion vector by performing decoding of an encoded stream; a second decoding processing unit configured to obtain prediction motion vector selecting information by decoding the encoded stream; a motion vector selecting unit configured to set prediction motion vector candidates as to a block to be decoded, and select a motion vector, indicated in the prediction motion vector selecting information, from prediction motion vector candidates; and an adding unit configured to calculate a motion vector of the block to be decoded by adding the difference motion vector to the prediction motion vector.

With this invention, with regard to a block to be decoded, candidates of prediction motion vectors are set using motion vectors of the adjacent blocks which have been decoded and which are adjacent to this block. Also, candidates of prediction motion vectors are set in each case where case classifying is performed according to the difference of the motion vectors of adjacent blocks which have been decoded, for example. Here, in the event that the size of the block is great, more candidates of the prediction motion vector are set as compared with a case where the block size is smaller. Also, for example, case classifying is performed according to the difference of the motion vector of the adjacent block which has decoded, and the candidate of the prediction motion vector is set in each case. Also, motion vectors with difference occurring which exceeds a threshold value are each taken prediction motion vector candidates. Out of these candidates, the motion vector indicated in the prediction motion vector selecting information obtained by decoding an encoded stream is selected as a prediction motion vector. This prediction motion vector and the difference motion vector obtained by decoding the encoded stream are added, and the motion vector of the block to be decoded is calculated.

A second aspect of the present invention is an image decoding method including: a process of obtaining a difference motion vector by decoding an encoded stream; a process of obtaining prediction motion vector selecting information by decoding the encoded stream; a process of setting prediction motion vector candidates as to a block to be decoded, and selecting a motion vector, indicated in prediction motion vector selecting information, from prediction motion vector candidates; and a process of calculating a motion vector of the block to be decoded by adding the difference motion vector to the prediction motion vector.

A third aspect of the present invention is a program causing a computer to execute image decoding, the program causing the computer to execute: a procedure of obtaining the difference motion vector by decoding an encoded stream; a procedure of obtaining prediction motion vector selecting information by decoding the encoded stream; a procedure of setting prediction motion vector candidates as to a block to be decoded, and selecting a motion vector, indicated in the prediction motion vector selecting information, from prediction motion vector candidates; and a procedure of calculating a motion vector of the block to be decoded by adding the difference motion vector to the prediction motion vector.

A fourth aspect of the present invention is an image encoding device including: a motion vector selecting unit configured to set prediction motion vector candidates as to a block to be encoded, and select from the candidates a motion vector where encoding efficiency is best, as a prediction motion vector; a first encoding processing unit configured to perform encoding of a difference motion vector indicating the difference between the prediction motion vector selected by the motion vector selecting unit and a motion vector of the block to be encoded; and a second encoding processing unit configured to perform encoding of prediction motion vector selecting information indicating which motion vector has been selected from the prediction motion vector candidates.

With this invention, with a block to be encoded, a candidates of prediction motion vectors are set using motion vectors of adjacent blocks which have been decoded and which are adjacent to this block. Also, the candidates of the prediction motion vector are set in each case where case classifying is performed according to the difference of the motion vector of the adjacent block which has been decoded, for example. Here, in the event that the size of the block is great, more candidates of the prediction motion vector are set as compared with the case where the block size is smaller. Also, for example, case classifying is performed according to the difference of the motion vector of the adjacent block is performed, and the candidate of the prediction motion vector is set in each case. Also, motion vectors with difference occurring which exceeds a threshold value are each taken prediction motion vector candidates. Out of these candidates, a prediction motion vector is selected, and the difference motion vector indicating the difference between the selected prediction motion vector and the motion vector of the block to be encoded is encoded. Also, in the event that multiple candidates of the prediction motion vector exist, prediction motion vector selecting information indicating which motion vector has been selected from the multiple candidates is encoded. Further, with the selecting of the prediction motion vector from the candidates, the motion vector where the encoding efficiency is best is selected as the prediction motion vector.

A fifth aspect of the present invention is an image decoding method comprising: a process of setting prediction motion vector candidates as to a block to be encoded, and selecting from the candidates a motion vector where encoding efficiency is best, as a prediction motion vector; a process of performing encoding of a difference motion vector indicating the difference between the selected prediction motion vector and a motion vector of the block to be encoded; and a process of performing encoding of the prediction motion vector selecting information indicating which motion vector has been selected from the prediction motion vector candidates.

A sixth aspect of the present invention is a program causing a computer to execute image decoding, the program causing the computer to execute: a procedure of setting prediction motion vector candidates as to a block to be encoded, and selecting from the candidates a motion vector where the encoding efficiency is the best, as a prediction motion vector; a procedure of performing encoding of a difference motion vector indicating the difference between the selected prediction motion vector and a motion vector of the block to be encoded; and a procedure of performing encoding of the prediction motion vector selecting information indicating which motion vector has been selected from the prediction motion vector candidates.

Note that a program according to the present invention is a program which can be provided by recoding medium, communication medium, and storage medium such as optical disc, magnetic disk, and semiconductor memory, for example, or communication medium such as a network, which are provided with a computer-readable form as to a general-purpose computer system which can execute various programs. Providing such a program with a computer-readable form enables realizing processing in accordance with the program on the computer system.

Advantageous Effects of Invention

According to the present invention, in image decoding, as to the block to be decoded, a candidate of the prediction motion vector is set using this block and the motion vector of the adjacent block which has been decoded. Also, the motion vector indicated in the prediction motion vector selecting information obtained by performing lossless decoding on an encoded stream is selected from the candidates so as to be prediction motion vector. The motion vector of the block to be decoded is calculated by adding the difference motion vector obtained by performing lossless decoding on theses prediction motion vector and encoded stream. Also, with encoding of image, a candidate of the prediction motion vector is set as to the block to be encoded, and the motion vector where the encoding efficiency is best is selected from this candidate as prediction motion vector. Also, encoding of the difference motion vector indicating the difference of the prediction motion vector and the motion vector of the block to be encoded, and the prediction motion vector selecting information indicating which motion vector has been selected from the candidates are performed. Thus, the motion vector of which the encoding efficiency is best is selected from the candidates of the prediction motion vectors and used, and accordingly reduction of code amount needed for transmission of the motion vector is realized, thereby improving encoding efficiency. Also, along with the reduction of the code amount needed for the transmission of the motion vector, raising bit rate of the quantized data can be enabled and image quality can be improved. Brief Description of Drawings

[Fig. 1] Fig. 1 is a block diagram to illustrate a conventional deciding method of a prediction motion vector.
[Fig. 2] Fig. 2 is a diagram illustrating a configuration of an image encoding device.
[Fig. 3] Fig. 3 is a diagram to illustrate case classifying in accordance with prediction block sizes, and candidates of the prediction motion vectors in each case.
[Fig. 4] Fig. 4 is a diagram illustrating a configuration regarding motion vectors at a lossless encoding unit.
[Fig. 5] Fig. 5 is a diagram illustrating prediction block sizes used in image encoding processing.
[Fig. 6] Fig. 6 is a flowchart illustrating operation of the image encoding processing.
[Fig. 7] Fig. 7 is a flowchart illustrating prediction processing.
[Fig. 8] Fig. 8 is a flowchart illustrating intra prediction processing.
[Fig. 9] Fig. 9 is a flowchart illustrating inter prediction processing.
[Fig. 10] Fig. 10 is a flowchart illustrating encoding processing regarding the motion vector performed at lossless encoding unit.
[Fig. 11] Fig. 11 is a diagram illustrating a configuration of an image decoding device.

[Fig. 12] Fig. 12 is a diagram illustrating a configuration regarding motion vectors at a lossless decoding unit.

[Fig. 13] Fig. 13 is a flowchart illustrating operation of image decoding processing.

[Fig. 14] Fig. 14 is a flowchart illustrating decoding processing regarding the motion vector, performed at the lossless decoding unit.

[Fig. 15] Fig. 15 is a flowchart illustrating prediction processing.

[Fig. 16] Fig. 16 is a diagram to illustrate case classifying in accordance with differences of motion vectors of adjacent blocks and candidates of prediction motion vectors in each case.

[Fig. 17] Fig. 17 is a diagram illustrating another configuration regarding a motion vector, at a lossless encoding unit.

[Fig. 18] Fig. 18 is a flowchart illustrating other encoding processing regarding the motion vector, performed at the lossless encoding unit.

[Fig. 19] Fig. 19 is a diagram illustrating a configuration regarding a motion vector, at a lossless decoding unit.

[Fig. 20] Fig. 20 is a flowchart illustrating other decoding processing regarding the motion vector performed at the lossless decoding unit.

[Fig. 21] Fig. 21 is a diagram to illustrate case classifying in accordance with continuity of blocks where equivalent movement occurs.

[Fig. 22] Fig. 22 is a diagram illustrating candidates of prediction motion vectors in each case.

[Fig. 23] Fig. 23 is a flowchart illustrating other encoding processing regarding the motion vector, performed at the lossless encoding unit.

[Fig. 24] Fig. 24 is a flowchart illustrating other decoding processing regarding the motion vector, performed at the lossless decoding unit.

[Fig. 25] Fig. 25 is a diagram exemplifying probability of occurrence in each candidate of prediction motion vector.

[Fig. 26] Fig. 26 is a diagram exemplifying a schematic configuration of a television receiver.

[Fig. 27] Fig. 27 is a diagram exemplifying a schematic configuration of a cellular telephone.

[Fig. 28] Fig. 28 is a diagram exemplifying a schematic configuration of a recording/playback device.

[Fig. 29] Fig. 29 is a diagram exemplifying a schematic configuration of an imaging apparatus.

Description of Embodiments

Hereinafter, embodiments of the present invention will be described. Note that description will proceed in the following order.

1. Configuration of Image Encoding Device
2. Prediction Method of Motion Vector
3. Configuration of Lossless Encoding Unit
4. Operation of Image Encoding Device
5. Configuration of Image Decoding Device
6. Configuration of Lossless Decoding Unit
7. Operation of Image Decoding Device
8. Other Prediction Method of Motion Vector
9. Other Configuration of Lossless Encoding Unit
10. Operation of Lossless Encoding Unit of Other Configuration
11. Other Configuration of Lossless Decoding Unit
12. Operation of Lossless Decoding Unit with Other Configuration
13. Other Prediction Method of Motion Vector
14. Other Configuration and Operation of Lossless Encoding Unit
15. Other Configuration and Operation of Lossless Decoding Unit
16. Encoding Processing of Prediction Motion Vector Identification Information
17. Case of Software Processing
18. Case of Application to Electronic Equipment

<1. Configuration of Image Encoding Device>

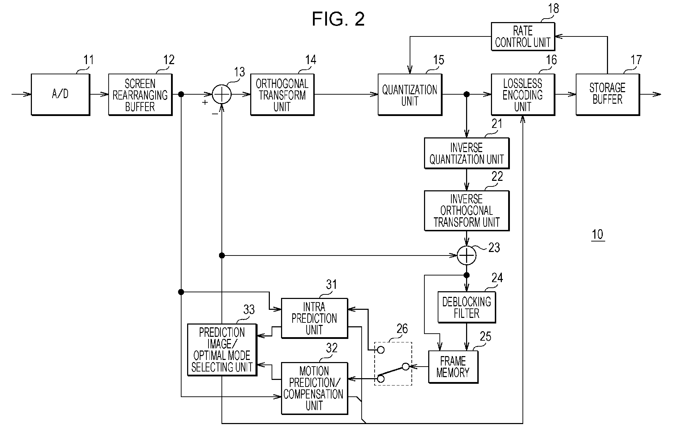

Fig. 2 illustrates a configuration of an image encoding device. The image encoding device 10 includes an Analog/Digital conversion unit (A/D conversion unit) 11, a screen rearranging buffer 12, a subtracting unit 13, an orthogonal transform unit 14, a quantization unit 15, a lossless encoding unit 16, a storage buffer 17, and a rate control unit 18. Further, the image encoding device 10 includes an inverse quantization unit 21, an inverse orthogonal transform unit 22, an adding unit 23, a deblocking filter 24, a frame memory 25, a selector 26, an intra prediction unit 31, a motion prediction/compensation unit 32, and a prediction image/optimal mode selecting unit 33.

The A/D conversion unit 11 performs conversion of analog image signals into digital image data and outputs to the screen rearranging buffer 12.

The screen rearranging buffer 12 performs rearranging of frames as to the image data output from the A/D conversion unit 11. The screen rearranging buffer 12 performs rearranging of the frames according to a GOP (Group of Pictures) structure relating to the encoding processing, and outputs the image data after rearranging to the subtracting unit 13, intra prediction unit 31, and motion prediction/compensation unit 32.

The image data output from the screen rearranging buffer 12 and the prediction image data selected at the later-described prediction image/optimal mode selecting unit 33 are supplied to the subtracting unit 13. The subtracting unit 13 calculates prediction error data which is a difference between the image data output from the screen rearranging buffer 12 and the prediction image data supplied from the prediction image/optimal mode selecting unit 33, and outputs to the orthogonal transform unit 14.

The orthogonal transform unit 14 performs orthogonal transform processing such as discrete cosine transform (DCT : Discrete Cosine Transform), Karhunen-Loéve transform or the like, as to the prediction error data output from the subtracting unit 13. The orthogonal transform unit 14 outputs the transform coefficient data obtained by performing orthogonal transform processing to the quantization unit 15.

The transform coefficient data output from the orthogonal transform unit 14 and rate control signals from the later-described rate control unit 18 are supplied to the quantization unit 15. The quantization unit 15 performs quantization of the transform coefficient data and outputs the quantized data to the lossless encoding unit 16 and inverse quantization unit 21. Also, the quantization unit 15 switches the quantized parameter (quantization scale) based on the rate control signals from the rate control unit 18 so as to change bit rate of the quantized data.

The quantized data output from the quantization unit 15 and prediction mode information from the later-described intra prediction unit 31, motion prediction/compensation unit 32, and prediction image/optimal mode selecting unit 33 are supplied to the lossless encoding unit 16. Note in the prediction mode information, according to the intra prediction or inter prediction, macroblock type indicating a prediction block size, prediction mode, motion vector information, reference picture information and the like are included. The lossless encoding unit 16 performs lossless encoding processing as to the quantized data, for example using variable length coding, arithmetic coding, or the like, to generate an encoded stream which is then output to the storage buffer 17. Also, the lossless encoding unit 16 performs lossless encoding on the prediction mode information and adds to, for example, header information of the encoded stream. Also, the lossless encoding unit 16 sets the candidates of the prediction motion vector and of these candidates, selects a motion vector of which the encoding efficiency is best as a prediction motion vector. The lossless encoding unit 16 performs lossless encoding of the prediction motion vector which indicates the difference between this prediction motion vector and a motion vector of a block to be encoded, and prediction motion vector selection information indicating which motion vector has been selected from candidates of the prediction motion vector, and adds to an encoded stream.

The storage buffer 17 stores an encoded stream from the lossless encoding unit 16. Also, the storage buffer 17 outputs the stored encoded stream with a transmission speed in accordance with the transmission path.

The rate control unit 18 performs monitoring of a available capacity of the storage buffer 17, generates a rate control signal according to the available capacity and outputs to the quantization unit 15. The rate control unit 18 obtains, for example, information indicating the available capacity from the storage buffer 17. In the event that there is little capacity available, the rate control unit 18 lowers the bit rate of the quantized data by the rate control signals. Also, in the event that there is much capacity available at the storage buffer 17, the rate control unit 18 raises the bit rate of the quantized data by the rate control signals.

The inverse quantization unit 21 performs inverse quantization processing of the quantized data supplied from the quantization unit 15. The inverse quantization unit 21 outputs the transform coefficient data obtained by performing inverse quantization processing to the inverse orthogonal transform unit 22.

The inverse orthogonal transform unit 22 outputs the data obtained by performing inverse transform processing of the transform coefficient data supplied from the inverse quantization unit 21 to the adding unit 23.

The adding unit 23 adds data supplied from the inverse orthogonal transform unit 22 and prediction image data supplied from the prediction image/optimal mode selecting unit 33 to generate decoded image data, and outputs to the deblocking filter 24 and frame memory 25.

The deblocking filter 24 performs filtering processing to decrease block distortion which occurs at the time of image encoding. The deblocking filter 24 performs filtering processing to remove the block distortion from the decoded image data supplied from the adding unit 23, and outputs the decoded image data after filtering processing in the frame memory 25.

The frame memory 25 holds the decoded image data supplied from the adding unit 23 and the decoding image data after filtering processing supplied from the deblocking filter 24.

The selector 26 supplies decoding image data before filtering processing, which has been read out from the frame memory 25 to perform intra prediction, to the intra prediction unit 31. Also, the selector 26 supplies decoding image data after filtering processing, which has been read out from the frame memory 25 to perform inter prediction, to the motion prediction/compensation unit 32.

The intra prediction unit 31 performs intra prediction processing of all the candidate intra prediction modes, using image data of the image to be encoded output from the screen rearranging buffer 12 and decoded image data before filtering processing read out from the frame memory 25. Further, the intra prediction unit 31 calculates a cost function value as to each intra prediction mode and selects the intra prediction mode of which the calculated cost function value is smallest, that is, the intra prediction mode where the encoding efficiency becomes best as an optimal intra prediction mode. The intra prediction unit 31 outputs prediction image data generated in the optimal intra prediction mode, prediction mode information regarding the optimal intra prediction mode, and a cost function value in the optimal intra prediction mode, to the prediction image/optimal mode selecting unit 33. Also, to obtain generated code amount used at the time of calculating a cost function value as described later, the intra prediction unit 31 outputs prediction mode information regarding the intra prediction mode to the lossless encoding unit 16, in the intra prediction processing of each intra prediction mode.

The motion prediction/compensation unit 32 performs motion prediction/compensation processing for all prediction block sizes (motion compensation block size) corresponding to macroblocks. The motion/compensation unit 32 detects motion vectors in each image of each prediction block size in image to be encoded read out from the screen rearranging buffer 12, using decoded image data after filtering processing read out from the frame memory 25. Further, the motion prediction/compensation unit 32 performs motion compensation processing on the decoded image based on the detected motion vector to generate prediction image. Also, the motion prediction/compensation unit 32 calculates a cost function value to each prediction block size, and selects a prediction block size of which the calculated cost function value is smallest, that is, a prediction block size of which the encoding efficiency is best as an optimal inter-prediction mode. The motion prediction/compensation unit 32 outputs prediction image data generated in the optimal inter prediction mode and prediction mode information regarding the optimal inter prediction mode, and a cost function value in the optimal inter prediction mode to the prediction image/optimal mode selecting unit 33. Also, to obtain generated code amount used at the time of calculating cost function values, the motion prediction/compensation unit 32 outputs prediction mode information regarding the inter prediction mode to the lossless encoding unit 16, in inter prediction processing with each prediction block size. Note that the motion prediction/compensation unit 32 performs prediction of skipped macroblocks and direct mode, as inter prediction modes as well.

Also, the motion prediction/compensation unit 32 calculates a cost function value for each candidate of the prediction motion vector, in order to select a motion vector of which the encoding efficiency is best, from candidates of the prediction motion vector, at the lossless encoding unit 16. The motion prediction/compensation unit 32 notifies the calculated a cost function values to the lossless encoding unit 16. The cost function values for each candidate of prediction motion vector may be calculated when the cost function values are calculated in each prediction block size, and cost function values in each candidate of prediction motion vector may be calculated in the decided optimal inter prediction mode.

The prediction image/optimal mode selecting unit 33 compares a cost function value supplied from the intra prediction unit 31 to a cost function value supplied from the motion prediction/compensation unit 32 in increments of macroblocks, and selects the one of which the cost function value is less than the other as the optimal mode where the encoding efficiency will be best. Also, the prediction image/optimal mode selecting unit 33 outputs the prediction image data generated in the optimal mode to the subtracting unit 13 and adding unit 23. Further, the prediction image/optimal mode selecting unit 33 outputs the prediction mode information in the optimal mode to the lossless encoding unit 16. Note that the prediction image/optimal mode selecting unit 33 performs intra prediction or inter prediction in increments of slices.

<2. Prediction Method of Motion Vector>

In the present application, case classifying according to the prediction block size (motion compensation block size) is performed, and a candidate of the prediction motion vector is set for each case beforehand. Calculation of the encoding amount is then performed using the candidates and a candidate of which the encoding efficiency is best, that is, a candidate of which the encoding amount is the smallest, is decided as the prediction motion vector. Here, as described using Fig. 1, in the case of the prediction block size being large, the prediction precision of the motion vector may deteriorate as compared with a case where the prediction block size is small. Therefore, in the case classifying, when the prediction block size is large, candidates of the prediction motion vector are increased, so as to select a motion vector of which the encoding efficiency is best.

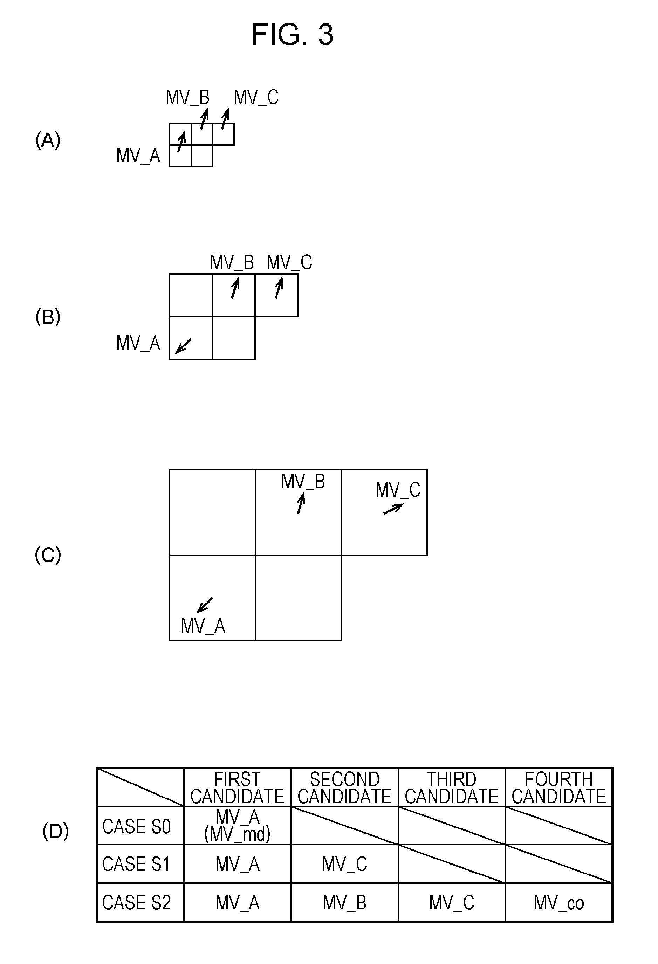

Fig. 3 indicates case classifying according to the prediction block size and candidates of prediction motion vector in each case. For example, in the case of the prediction block size being equal to or smaller than 8x8 pixels, this will be referred to as case S0 (e.g., (A) in Fig. 3), in the case of the prediction block size being equal to or greater than 8x8 pixels and equal to or smaller than 16x16 pixels, as case S1 (e.g., (B) in Fig. 3), and in the case of the prediction block size being equal to or greater than 16x16 pixels, as case S2 (e.g., (C) in Fig. 3).

In case S0, a motion vector of either one block of the adjacent blocks which have been encoded, or a middle value of motion vectors of the adjacent blocks which have been encoded, is taken as a candidate. Note that, in Fig. 3, a case is exemplified in which the motion vector MV_A of the adjacent block on the left side, or the middle value MV_md of the motion vectors MV_A, MV_B, and MV_C of the adjacent blocks on the left, upper, and upper-right side, is taken as a candidate.

In case S1, motion vector of any two blocks of the adjacent blocks which have been encoded are taken as candidates. Here, in the event that the distance between two blocks where the motion vectors taken as a candidate is short, there is concern that the prediction motion vector of which the encoding efficiency is best may not be selected. For example, in the event that motion vector MV_B and MV_C indicated in (B) in Fig. 3 are set as candidates, in the case of the motion vector of the block to be encoded is near the motion vector MV_A, the prediction motion vector of which the encoding efficiency is best cannot be selected. Therefore, in the case of multiple motion vectors of the adjacent blocks are selectively used and taken as a candidate of a prediction motion vector, motion vector of the blocks which are mutually apart among the adjacent blocks which has been encoded are selected. For example, let us say that the motion vector MV_A of the left-side adjacent block is the first candidate, and the motion vector MV_C of the adjacent block on the upper-right side is the second candidate.

In case S2, more candidates than the ones in case S1, that is, all the motion vectors of the adjacent blocks which have been encoded are taken as candidates. For example, let us say that the motion vector MV_A of the left-side adjacent block is the first candidate, and the motion vector MV_B of the upper-side adjacent block is the second candidate, and the motion vector MV_C of the adjacent block on the upper-right side is the third candidate. Furthermore, the motion vector MV_Co of the same block as the one to be encoded in the reference picture is taken as the fourth candidate.

Thus, case classifying is performed according to the prediction block size (motion compensation block size) and the motion vector where the encoding efficiency is best is decided to be the prediction motion vector, out of the candidates of the applicable case.

<3. Configuration of Lossless Encoding Unit>

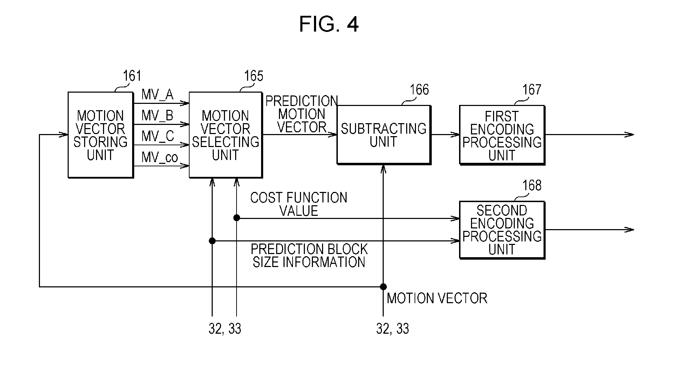

Fig. 4 illustrates a configuration regarding motion vectors at the lossless encoding unit. The lossless encoding unit 16 includes a motion vector storage unit 161, a motion vector selection unit 165, a subtracting unit 166, a first encoding processing unit 167, and a second encoding processing unit 168.

The motion vector storage unit 161 stores a motion vector of each block to set candidates of the prediction motion vector, using motion vectors of the adjacent blocks which have been encoded and are adjacent to the block to be encoded. Note that the motion vector storage unit 161 may store the motion vector of the same block as the one to be encoded in the reference picture, to handle the direct mode.

The motion vector selecting unit 165 sets candidates of a prediction motion vector from motion vectors of the adjacent blocks stored in the motion vector storage unit 161 and motion vector of the same block as the one to be encoded in the reference picture, based on the prediction block size information supplied from the motion prediction/compensation unit 32 and prediction image/optimal mode selecting unit 33. Also, the motion vector selection unit 165 decides a prediction motion vector from the candidates of prediction motion vectors, based on cost function values calculated at the motion prediction/compensation unit 32. The motion vector selecting unit 165 outputs the decided prediction motion vector to the subtracting unit 166.

The subtracting unit 166 calculates a difference motion vector which is the difference between the motion vector indicated in the motion vector information from the motion prediction/compensation unit 32 or prediction image/optimal mode selecting unit 33, and the prediction motion vector output from the motion vector selection unit 165. The subtracting unit 166 outputs the difference motion vector information indicating the difference motion vector to the first encoding processing unit 167.

The first encoding processing unit 167 performs encoding of the difference motion vector information using a variable-length encoding (VLC) table or an arithmetic code. Also, the second encoding processing unit 168 performs encoding of prediction block size information and prediction motion vector selecting information using the VLC table or arithmetic code. Note that the prediction motion vector selecting information is the information to indicate which motion vector has been decided to be the prediction motion vector out of the candidates for the prediction motion vector, with a flag being used, for example. The information encoded in the first encoding processing unit 167 and second encoding processing unit 168 is added to the header information of the encoded stream as described above.

<4. Operation of Image Encoding Device>

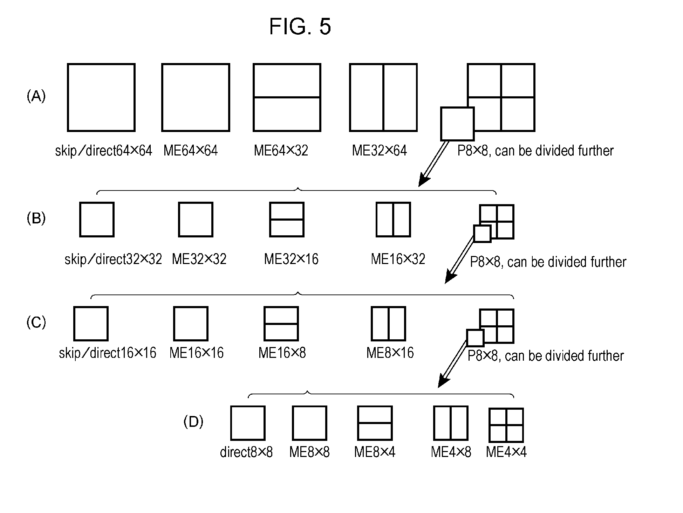

Next, description will be made with regard to operations of image encoding processing. Fig. 5 illustrates prediction block sizes to use with the image encoding processing. With the H.264/AVC format, as shown in (C) and (D) of Fig. 5, a prediction block size of 16x16 pixels to 4x4 pixels is stipulated. Also, in the event of the macroblocks extended further than the H.264/AVC format being used, e.g., when 32x32-pixel macroblocks are used, for example the prediction block size shown in (B) of Fig. 5 is stipulated. Also, for example, when 64x64-pixel macroblocks are used, e.g., a prediction block size shown in (A) of Fig. 5 is stipulated.

Note that, in Fig. 5, "Skip/direct" indicates to be a prediction block size when a skipped macroblock or a direct mode has been selected at the motion prediction/compensation unit 32. Also, "ME" indicates that it is motion compensation block size. Also, "P8x8" indicates that the size of macroblocks can be further divided into the a lower sub-hierarchal level.

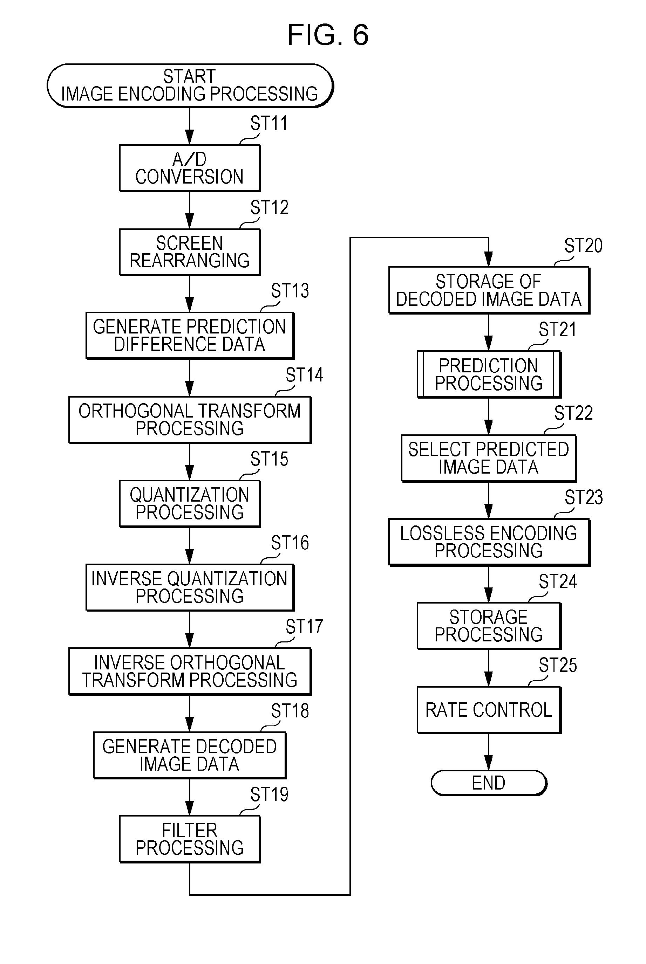

Fig. 6 is a flowchart which illustrates operation of image encoding processing. In step ST11, the A/D converting unit 11 performs A/D conversion on the input image signals.

In step ST12, the screen rearranging buffer 12 performs image rearranging. The screen rearranging buffer 12 stores image data supplied from the A/D converting unit 11 and performs rearranging from an order for displaying the pictures to an order for encoding.

In step ST13, the subtracting unit 13 generates prediction error data. The subtracting unit 13 calculates the difference between the image data of images rearranged in step ST12 and prediction image data selected at the prediction image/optimal mode selecting unit 33 to generate prediction error data. The data amount of the prediction error data is smaller than that of the original image data. Therefore, data amount can be compressed in comparison with a case where the image is encoded as it is.

In step ST14, the orthogonal transform unit 14 performs orthogonal transform processing. The orthogonal transform unit 14 performs orthogonal transform on the prediction error data supplied from the subtracting unit 13. Specifically, orthogonal transform such as such as discrete cosine transform, Karhunen-Loéve transform, and the like are performed as to the prediction error data to output transform coefficient data.

In step ST15, the quantization unit 15 performs quantization processing. The quantization unit 15 quantizes transform coefficient data. Rate control is performed at the time of quantization, as illustrated in the later-described processing in step ST25.

The inverse quantization unit 21 performs inverse quantization processing in step ST16. The inverse quantization unit 21 performs inverse quantization on the transform coefficient data quantized by the quantization unit 15 with properties corresponding to the properties of the quantization unit 15.

In step ST17, the inverse orthogonal transform unit 22 performs inverse orthogonal transform processing. The inverse orthogonal transform unit 22 performs inverse orthogonal transform on the transform coefficient data subjected to inverse quantization by the inverse quantization unit 21 with properties corresponding to the properties of the orthogonal transform unit 14.

In step ST18, the adding unit 23 generates decoded image data. The adding unit 23 adds the prediction image data supplied from the prediction image/optimal mode selecting unit 33 and the data after inverse orthogonal transform of the corresponding position to this prediction image, to generate decoded image data.

In step ST19, the deblocking filter 24 performs filtering processing. The deblocking filter 24 filters decoded image data output from the adding unit 23 and removes block distortion.

In step ST20, the frame memory 25 stores the decoded image data. The frame memory 25 stores the decoded image data before filtering processing and decoded image data after filtering processing.

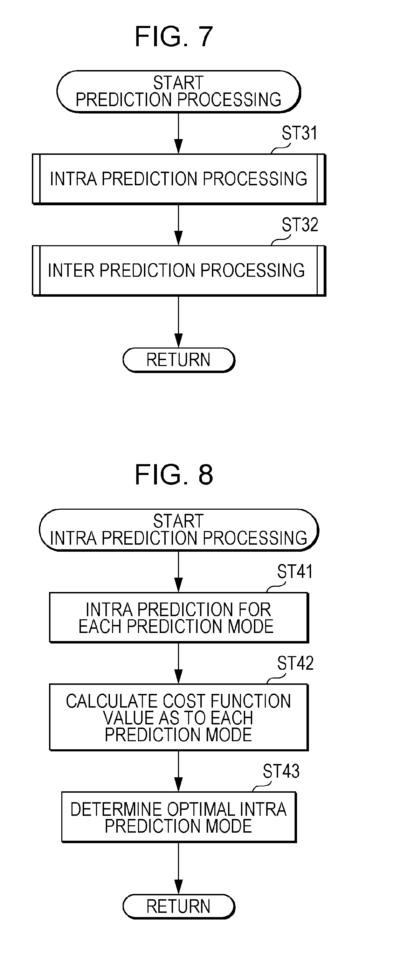

In step ST21, the intra prediction unit 31 and motion prediction/compensation unit 32 each performs prediction processing. That is to say, the intra prediction unit 31 performs intra prediction processing of the intra prediction mode, and the motion prediction/compensation unit 32 performs motion prediction/compensation processing of the inter prediction mode. The details of the prediction processing are described below with reference to Fig. 7, in which the prediction processing with all candidate prediction modes is each performed, and cost function values with all the candidate prediction mode are each calculated by this processing. Further, based on the calculated cost function values, the optimal intra prediction mode and optimal inter prediction mode are selected, and the prediction image and the cost function and prediction mode information generated in the selected prediction mode are supplied to prediction image/optimal mode selecting unit 33.

In step ST22, the prediction image/optimal mode selecting unit 33 selects the prediction image data. The prediction image/optimal mode selecting unit 33 decides in the optimal mode of which the encoding efficiency is best, based on each cost function value output from the intra prediction unit 31 and motion prediction/compensation unit 32. Furthermore, the prediction image/optimal mode selecting unit 33 selects the prediction image data of the decided optimal mode and supplies to the subtracting unit 13 and adding unit 23. This prediction image is used for calculation in step ST13 and ST18, as described above. Note that the prediction mode information corresponding to the selected prediction image data is output to the lossless encoding unit 16.

In step ST23, the lossless encoding unit 16 performs lossless encoding processing. The lossless encoding unit 16 performs lossless encoding on the quantization data output from the quantization unit 15. That is, lossless encoding such as variable length encoding or arithmetic encoding is performed as to the quantization data to be made data compression. At this time, the prediction mode information (including macroblocks type and prediction mode, and reference picture information, for example) input into the lossless encoding unit 16 in the above-described step ST22, and information regarding motion vectors and so forth, are lossless encoded. Further, lossless encoded data such as prediction mode information is add to the header information of the encoded stream generated by performing lossless encoding on the quantization data.

In step ST24, the storage buffer 17 performs storage processing. The storage buffer 17 stores an encoded stream output from the lossless encoding unit 16. The encoded stream stored in this storage buffer 17 is read out appropriately and is transmitted to the decoding side through the transmission path.

In step ST25, the rate control unit 18 performs rate control. The rate control unit 18 controls, in the case of storing an encoded stream in the storage buffer 17, the rate of the quantization operation of the quantization unit 15 so that overflow or underflow does not occur in the storage buffer 17.

Next, with reference to the flowchart of Fig. 7, prediction processing in step ST21 in Fig. 6 will be described.

In step ST31, the intra prediction unit 31 performs intra prediction processing. The intra prediction unit 31 performs intra prediction on the image of the block to be encoded, in all of the candidate intra prediction modes. Note that, as for the image data of the decoded image referred to in the intra prediction, the decoded image data stored in the frame memory 25 is used without being subjected to filtering processing by the deblocking filter 24. The details of the intra prediction processing will be described below, in which, due to this processing, intra prediction is performed in all candidate intra prediction modes, and a cost function value is calculated for all candidate intra prediction modes. The intra prediction mode of which the encoding efficiency is best is then selected from all intra prediction modes, based on the calculated cost function values.

In step ST32, the motion prediction/compensation unit 32 performs inter prediction processing. The motion prediction/compensation unit 32 performs inter prediction processing of all candidate inter-prediction modes (all prediction block sizes) using decoded image data after filtering processing stored in the frame memory 25. The details of the inter prediction processing will be described below, in which, due to this processing, prediction processing is performed with all candidate inter prediction modes, and cost function values are calculated for candidate inter prediction modes. The inter prediction mode of which encoding efficiency is the best is then selected from all inter prediction modes, based on the calculated cost function values.

Intra prediction processing in step ST31 in Fig. 7 will be described with reference to the flowchart of Fig. 8.

In step ST41, the intra prediction unit 31 performs intra prediction of each prediction mode. The intra prediction unit 31 generates prediction image data in each intra prediction mode, using decoded image data before filtering processing stored in the frame memory 25.

In step ST42, the intra prediction unit 31 calculates cost function values to each prediction mode. Calculation of cost function values is performed, as stipulated in JM (Joint Model) which is the reference software in the H.264/AVC format, based on either technique of the High Complexity mode or Low Complexity mode.

That is to say, in the High Complexity mode, as for processing in step ST41, temporarily until lossless encoding processing is performed as to all prediction modes to be a candidate, and the cost function value represented by the following Expression (1) are calculated as to each prediction mode.

$$\text{Cost(Mode} \in \Omega) = D + \lambda \cdot R \ \ \dots \ (1)$$

$\Omega$ represents the overall group of a candidate prediction mode to encode the block or macroblock. D represents difference energy (distortion) between a decoded image and an input image in the event that encoding has been performed in prediction mode. R is generated code amount including orthogonal transform coefficient, prediction mode information, and so forth, and $\lambda$ is a Lagrange multiplier given as a function of quantization parameter QP.

That is, at the time of perform encoding in High Complexity Mode, the above parameters D and R are calculated and so there is a need to once perform encode processing temporarily using all the candidate prediction modes, and accordingly a higher calculating amount is needed.

On the other hand, in the Low Complexity mode, as processing of step ST41, as far as generating of prediction images and calculation of header bits such as motion vector information and prediction mode information, is performed for all candidate prediction modes, and a cost function value represented by the following Expression (2) is calculated as to each prediction mode.

$$\text{Cost(Mode} \in \Omega) = D + \text{QPtoQuant(QP)} \cdot \text{Header\_Bit} \ \ \dots \ (2)$$

$\Omega$ represents the overall group of a candidate prediction mode to encode the block or macroblock. D represents difference energy (distortion) between a decoded image and an input image in the event that encoding has been performed in prediction mode. Header_Bit the header bit for the prediction mode, and QPtoQuant is the function which is given as a function of quantization parameter QP.

That is, in the Low Complexity Mode, it is necessary to perform prediction processing regarding each prediction mode, however processing as far as decoded images is not needed, thereby realizing lower amount of calculating than the High Complexity Mode.

In step ST43, the intra prediction unit 31 decides the optimal intra prediction mode. The intra prediction unit 31 selects an intra prediction mode of which the cost function value is the smallest based on and from the cost function values calculated in step ST42, which is decided to the optimal intra prediction mode.

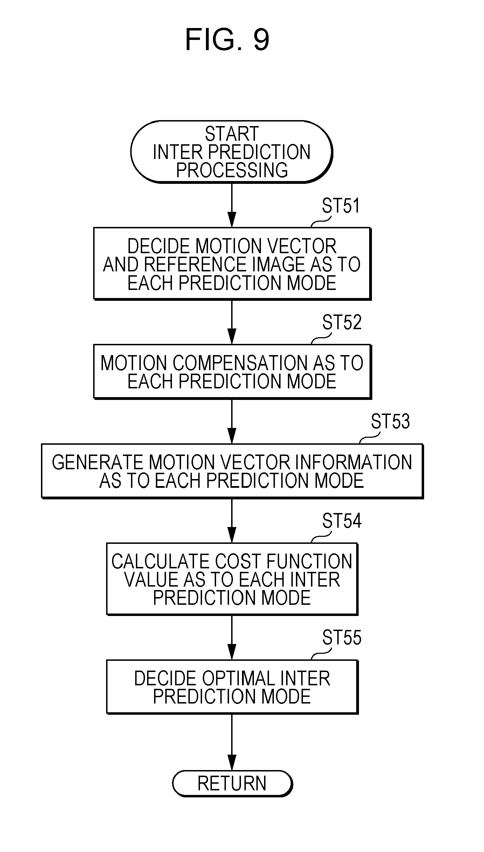

Next, with reference to a flowchart in Fig. 9, inter prediction processing of step ST32 in Fig. 7 will be described.

In step ST51, the motion prediction/compensation unit 32 decides each of a motion vector and a reference image to each prediction mode. That is, the motion prediction/compensation unit 32 decides each of a motion vector and a reference image for a block to be processed in each prediction mode.

In step ST52, the motion prediction/compensation unit 32 performs motion compensation as to each prediction mode. The motion prediction/compensation unit 32 performs, regarding each prediction mode (each prediction block size), based on the motion vector decided in step ST51, motion compensation as to the reference image and generates prediction image data regarding each prediction mode.

In step ST53, the motion prediction/compensation unit 32 generates motion vector information to each prediction mode. The motion prediction/compensation unit 32 generates motion vector information indicating the motion vector decided in each prediction mode. The generated motion vector information is used for calculation of the cost function values in next step ST54, and in the event that a corresponding prediction image is selected at the prediction image/ optimal mode selecting unit 33, this is included in the prediction information and output to the lossless encoding unit 16.

In step ST54, the motion prediction/compensation unit 32 calculates a cost function value to each inter-prediction mode. The motion prediction/compensation unit 32 performs calculation of cost function values, using the described Expressions (1) or (2). With the calculation of the cost function values, the generated code amount including information encoded at the first encoding processing unit 167 and second encoding processing unit 168 is used. Note that the calculation of the cost function values to the inter-prediction mode includes an evaluation of the cost function values of Skip Mode and Direct Mode stipulated in H.264/AVC format.

In step ST55, the motion prediction/compensation unit 32 decides an optimal inter prediction mode. The motion prediction/compensation unit 32 selects, based on the cost function values calculated in step ST54, a prediction mode of which the cost function value is smallest and decides an optimal inter prediction mode.

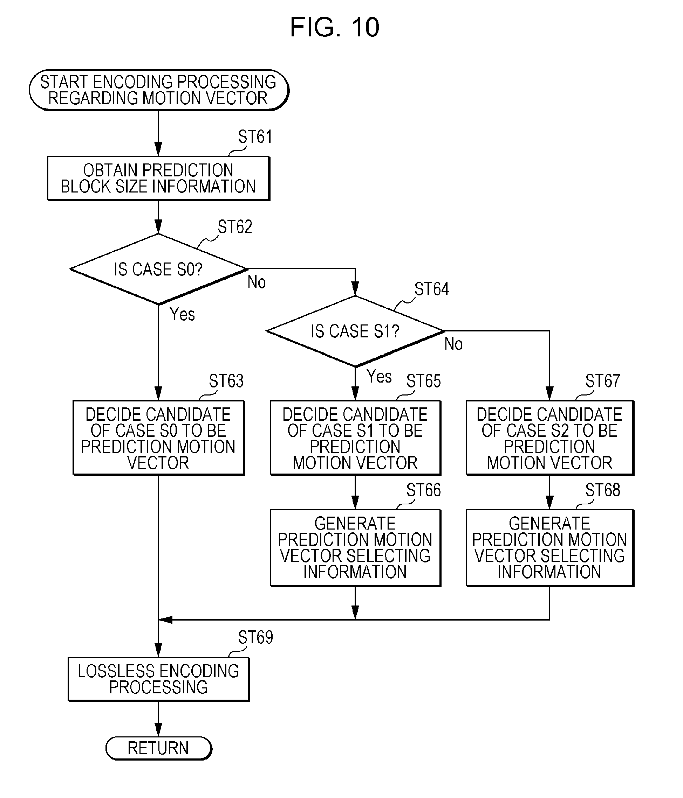

Next, encoding processing regarding a motion vector performed at the lossless encoding unit 16 will be described using the flowchart of Fig. 10. Note that Fig. 10 illustrates a case where case classifying and candidate setting have been performed as shown in Fig. 3.

In step ST61, the lossless encoding unit 16 acquires the prediction block size information.

In step ST62, the lossless encoding unit 16 distinguishes whether or not this corresponds to case S0. In the event of the prediction block size being equal to or smaller than 8x8 pixels, the lossless encoding unit 16 distinguishes that this corresponds to case S0 and proceeds to step ST63, but proceeds to step ST64 if the prediction block size is not equal to or smaller than 8x8 pixels.

The lossless encoding unit 16 decides a candidate of case S0 for the prediction motion vector in step ST63. The lossless encoding unit 16 decides motion vector MV_A (or motion vector MV_md) which is a candidate of case S0 for the prediction motion vector and advances to step ST69.

In step ST64, the lossless encoding unit 16 distinguishes whether or not this corresponds to case S1. In the event of the prediction block size being equal to or smaller than 16x16 pixels, the lossless encoding unit 16 distinguishes that this corresponds to the case S1 and proceeds to step ST65, but if the prediction block size is not equal to or smaller than 16x16 pixels, proceeds to step ST67.

In step ST65, the lossless encoding unit 16 decides the prediction motion vector from candidates of case S1. In the event that the lossless encoding unit 16 is case S1, motion vector MV_A and motion vector MV_C are taken as the candidates of the prediction motion vector, as shown in Fig. 3. Therefore, the lossless encoding unit 16 compares the cost function value when the motion vector MV_A which is the first candidate is used, with the cost function value when the motion vector MVC which is the second candidate is used, and decides the motion vector of which the cost function value is smaller to be the prediction motion vector.

In step ST66, the lossless encoding unit 16 generates prediction motion vector selecting information. The lossless encoding unit 16 generates the prediction motion vector selecting information indicating the prediction motion vector where the encoding efficiency is best, decided in step ST65. For example, the lossless encoding unit 16 uses a flag as prediction motion vector selecting information, and sets the flag to "0" when the motion vector MV_A is decided for the prediction motion vector, and sets a flag to "1" when the motion vector MV_C is decided for the prediction motion vector.

In step ST67, the lossless encoding unit 16 decides the prediction motion vector from the candidates of case S2. In the event that the lossless encoding unit 16 is case S2, motion vector MV_A, motion vector MV_B, motion vector MV_C, and motion vector MV_co are taken as the candidates, as shown in Fig. 3. Therefore, the lossless encoding unit 16 compares the cost function values when the motion vectors MV_A, MV_B, MV_C, and MV_co, which are the first to fourth candidates, are each used, and decides the motion vector of which the cost function value is smallest to be the prediction motion vector.

In step ST68, the lossless encoding unit 16 generates prediction motion vector selecting information. The lossless encoding unit 16 generates prediction motion vector selecting information indicating a prediction motion vector of which the encoding efficiency decided in step ST67 is best. For example, the lossless encoding unit 16 uses a flag as prediction motion vector selecting information, and sets the flag to "0" when motion vector MV_A is decided as the prediction motion vector, and the flag to "1" when motion vector MV_B is decided as the prediction motion vector. Also, the lossless encoding unit 16 sets the flag to "2" when motion vector MV_C is decided as the prediction motion vector, and the flag to "3" when motion vector MV_co is decided as the prediction motion vector.

In step ST69, the lossless encoding unit 16 performs lossless encoding processing. The lossless encoding unit 16 performs lossless encoding on the information indicating the difference motion vector between the prediction motion vector decided in steps ST63, 65, and 67, and the motion vector of the block to be encoded. Also, the lossless encoding unit 16 performs lossless encoding on the information and so forth indicating the prediction motion vector selecting information and prediction block size.

Thus, with the image encoding device and method according to the present invention, candidates of the prediction motion vector are set according to the size of the prediction block size, and from the candidates, the motion vector where the encoding efficiency becomes best is decided for the prediction motion vector. Therefore, reduction of the code amount required for the transmission of the motion vector can be realized, thereby improving encoding efficiency. Also, along with the reduction of the code amount required for the transmission of the motion vector, the bit rate of quantization data can be increased, thereby improving image quality. Also, in the case of the candidate of the prediction motion vector being one, such as with the case S0, prediction motion vector selecting information is unnecessary. Therefore, only when there are multiple candidates of the prediction motion vector, transmission of the prediction motion vector selecting information is transmitted, which further improves encoding efficiency.

<5. Configuration of Image Decoding Device>

The encoded stream generated by encoding input image is supplied to an image decoding device via a predetermined transmission path, recording medium, and the like and decoded.

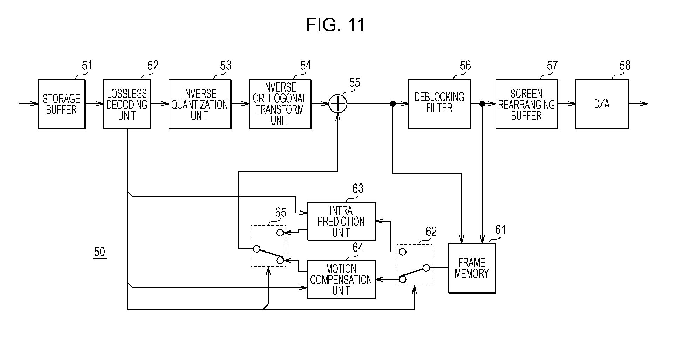

Fig. 11 shows a configuration for an image decoding device. The image decoding device 50 includes a storage buffer 51, a lossless decoding unit 52, an inverse quantization unit 53, an inverse orthogonal transform unit 54, an adding unit 55, a deblocking filter 56, a screen rearranging buffer 57, a digital/analog converting unit (D/A converting unit) 58. Furthermore, the image decoding device 50 includes a frame memory 61, selectors 62, 65, an intra prediction unit 63, and a motion compensation unit 64.

The storage buffer 51 stores an encoded stream which has been transmitted. The lossless decoding unit 52 decodes the encoded stream supplied from the storage buffer 51 by a format corresponding to the encoding format of the lossless encoding unit 16 of Fig. 2.

The lossless decoding unit 52 outputs prediction mode information which has obtained by decoding header information of the encoded stream to the intra prediction unit 63 and motion compensation unit 64, and to the deblocking filter 56. Also, the lossless decoding unit 52 sets the candidate of the prediction motion vector using motion vectors of the block to be decoded and adjacent blocks which have been decoded. The lossless decoding unit 52 selects, based on the prediction motion vector selecting information obtained by performing lossless decoding on the encoded stream, a motion vector from the candidate of the prediction motion vectors, and takes the selected motion vector as a prediction motion vector. Also, the lossless decoding unit 52 adds the prediction motion vector to a difference motion vector obtained by performing lossless decoding on the encoded stream and calculates the motion vector of the block to be decoded, and outputs to the motion compensation unit 64.

The inverse quantization unit 53 performs inverse quantization on the quantization data decoded at the lossless decoding unit 52 with the format corresponding to the quantization format of the quantization unit 15 in Fig. 2. The inverse orthogonal transform unit 54 performs inverse orthogonal transform on the output of the inverse quantization unit 53 with the format corresponding to the orthogonal transform format of the orthogonal transform unit 14 in Fig. 2 and outputs to the addition unit 55.

The adding unit 55 adds the data after inverse orthogonal transform to prediction image data to be supplied from the selector 65, to generate decoded image data and outputs in the deblocking filter 56 and frame memory 61.

The deblocking filter 56 performs filtering processing as to the decoded image data supplied from the adding unit 55, removes block distortion and then supplies and stores to the frame memory 61, and outputs to the screen rearranging buffer 57.

The screen rearranging buffer 57 performs rearranging of the images. That is, the order of the frame rearranged in order for encoding by the screen rearranging buffer 12 of Fig. 2 is rearranged to the original order for display and is output to the D/A converting unit 58.

The D/A converting unit 58 performs D/A conversion on the image data supplied from the screen rearranging buffer 57, so as to display the image by outputting to an unshown display.

The frame memory 61 holds the decoded image data before filtering processing supplied from the adding unit 55 and the decoded image data after filtering processing supplied from the deblocking filter 24.

When decoding of the prediction block where intra prediction has been performed is performed based on prediction mode information supplied from the inverse decoding unit 52, the selector 62 supplies decoded image data before filtering processing, read out from the frame memory 61, to the intra prediction unit 63. Also, when decoding of the prediction block where intra prediction has been performed is performed based on prediction mode information supplied from the lossless decoding unit 52, the selector 62 supplies decoded image data after filtering processing, read out from the frame memory 61, to the motion compensation unit 64.

The intra prediction unit 63 generates a prediction image based on the prediction mode information supplied from the lossless decoding unit 52 and outputs the generated prediction image data to the selector 65.

The motion compensation unit 64 performs motion compensation based on the prediction mode information and motion vector supplied from the lossless decoding unit 52, to generate prediction image data, which is output to the selector 65. That is, the motion compensation unit 64 performs motion compensation based on the motion vector, as to the reference image indicated in the reference frame information, based on the motion vector and reference frame information supplied from the lossless decoding unit 52, and generates prediction image data of the prediction block size.

The selector 65 supplies prediction image data generated at the intra prediction unit 63 to the adding unit 55. Also, the selector 65 supplies prediction image data generated at the motion compensation unit 64 to the adding unit 55.

<6. Configuration of Lossless Decoding Unit>

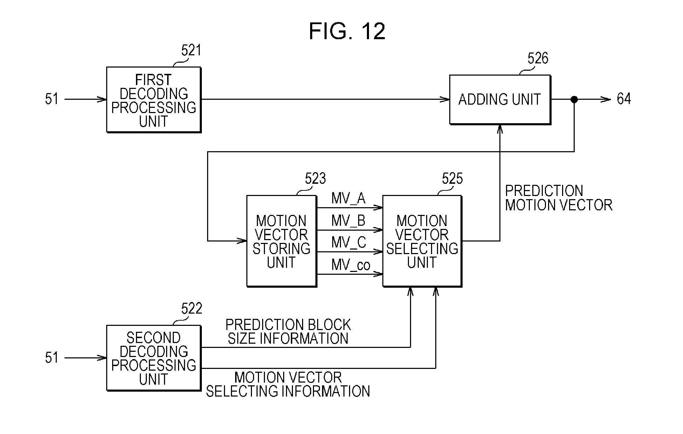

Fig. 12 illustrates the configuration regarding motion vectors at the lossless decoding unit. The lossless decoding unit 52 includes a first decoding processing unit 521, a second decoding processing unit 522, a motion vector storing unit 523, a motion vector selecting unit 525, and an adding unit 526.

The first decoding processing unit 521 performs decoding processing corresponding to the encoding which has been performed in the first encoding processing unit 167. The first decoding processing unit 521 performs lossless decoding processing of the encoded stream using a VLC table or an arithmetic code, and generates difference motion vector information.

The second decoding processing unit 522 performs decoding processing corresponding to encoding which has been performed in the second encoding processing unit 168. The second decoding processing unit 522 performs lossless decoding processing of the encoded stream using a VLC table or an arithmetic code, and generates prediction block size information, prediction motion vector selection information, and so forth.

The motion vector storing unit 523 stores the motion vector for each block, in order to decide a prediction motion vector using motion vectors of the adjacent blocks which have been decoded, adjacent to the block to be decoded. Note that, in the event of handling direct mode, the motion vector storing unit 523 stores the motion vector of the same block as with the block to be encoded in the reference picture.

The motion vector selection unit 525 performs case classifying based on the prediction block size information output from the second decoding processing unit 522, and sets candidates for the prediction motion vector from the motion vector of the adjacent block stored in the motion vector storing unit 161 and motion vector of the same block as with the block to be encoded in the reference picture. This case classifying and setting of the candidates of the prediction motion vector equate with the motion vector selection unit 165 of the encoding side. Furthermore, the motion vector selecting unit 525 selects, based on the prediction motion selecting information output from the second decoding processing unit 522, a motion vector from the candidates of the prediction motion vector, and outputs to the addition unit 526 as a prediction motion vector.

The adding unit 526 adds the prediction motion vector output from the motion vector selecting unit 525 to the difference motion vector indicated in the difference motion vector information output from the first decoding processing unit 521, and accordingly calculates the motion vector of the block to be encoded and outputs to the motion compensation unit 64.

<7. Operation of Image Decoding Device>

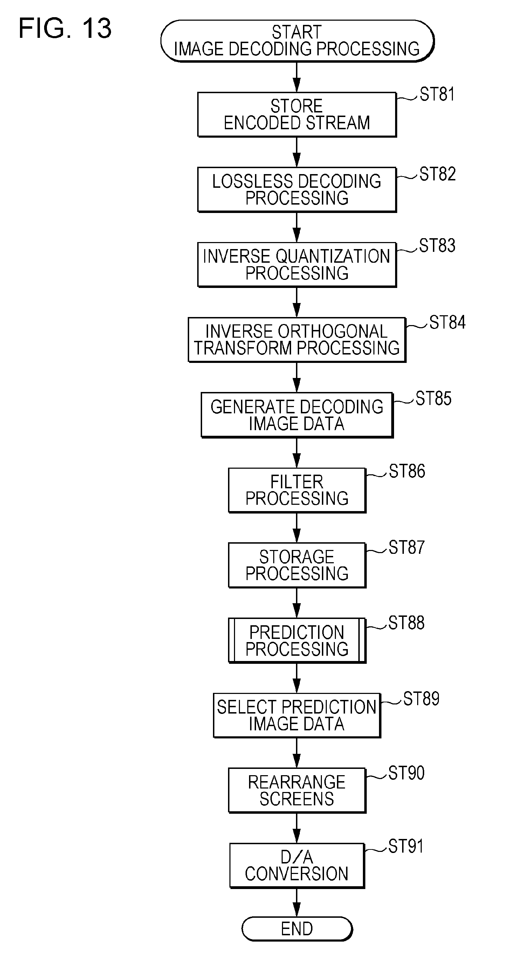

Next, with reference to the flowchart in Fig. 13, operation of image decoding processing which is performed at the image decoding device 50 will be described.

In step ST81, the storage buffer 51 stores the encoded stream which has been transmitted. In step ST82, the lossless decoding unit 52 performs lossless decoding processing. The lossless decoding unit 52 decodes the encoded stream supplied from the storage buffer 51. That is, the quantization data of each picture encoded by the lossless encoding unit 16 in Fig. 2 are obtained. Also, the lossless decoding unit 52 performs lossless encoding of prediction mode information included in the header information of the encoded stream, and supplies the obtained prediction mode information to the deblocking filter 56 and selectors 62 and 65. Furthermore, the lossless decoding unit 52 outputs, in the event that the prediction mode information is information regarding intra prediction mode, prediction mode information to the intra prediction unit 63. Also, the lossless decoding unit 52 outputs, in the event that the prediction mode information is information regarding intra prediction mode, prediction mode information to the motion compensation unit 64.

In step ST83, the inverse quantization unit 53 performs inverse quantization processing. The inverse quantization unit 53 performs inverse quantization on the quantization data decoded by the inverse decoding unit 52 with properties corresponding to the properties of the quantization unit 15 in Fig. 2.

In step ST84, the inverse orthogonal transform unit 54 performs inverse orthogonal transform processing. The inverse orthogonal transform unit 54 performs inverse orthogonal transform on the transform coefficient data subjected to inverse quantization by the inverse quantization unit 53 with properties corresponding to the properties of the orthogonal transform unit 14 of Fig. 2.

In step ST85, the adding unit 55 generates the decoded image data. The addition unit 55 adds the data obtained by being performed inverse orthogonal transform processing to the prediction image data selected in the later-described step ST89, and generates decoded image data. Thus, the original image is decoded.

In step ST86, the deblocking filter 56 performs filtering processing. The deblocking filter 56 performs filtering processing of the decoded image data output from the adding unit 55, and removes block distortion included in the decoded image.

In step ST87, the frame memory 61 performs storage processing of the decoded image data.

In step ST88, the intra prediction unit 63 and motion compensation unit 64 perform prediction processing. The intra prediction unit 63 and motion compensation unit 64 each perform prediction processing corresponding to the prediction mode information supplied from the lossless decoding unit 52.

That is, when the prediction mode information of the intra prediction is supplied from the lossless decoding unit 52, the intra prediction unit 63 performs intra prediction processing based on the prediction mode information and generates prediction image data. Also, in the event that the prediction mode information of the inter prediction is supplied from the lossless decoding unit 52, the motion compensation unit 64 performs motion compensation based on the prediction mode information and generates prediction image data.

In step ST89, the selector 65 selects prediction image data. That is, the selector 65 selects the prediction image supplied from the intra prediction unit 63 and prediction image data generated at the motion compensation unit 64 and supplies to the addition unit 55, so as to perform outputting and adding of the inverse orthogonal transform unit 54 in step ST85, as described above.

In step ST90, the screen rearranging buffer 57 performs image rearranging. That is to say, in the screen rearranging buffer 57, the order of frames rearranged for encoding by the screen rearranging buffer 12 of the image encoding device 10 in Fig. 2 is rearranged to the original order for display.

In step ST91, the D/A conversion unit 58 performs D/A conversion on the image data from the screen rearranging buffer 57 into the D/A conversion unit 58. This image is output to the unshown display and the image is displayed.

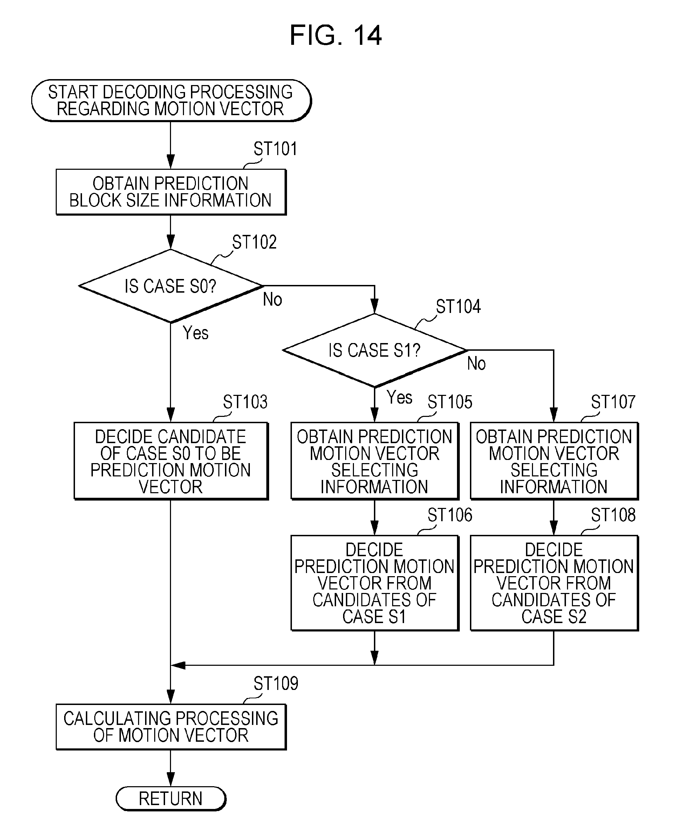

Next, decoding process regarding a motion vector performed in the lossless decoding unit 52 will be described using a flowchart in Fig. 14. Note that Fig. 14 also illustrates a case where case classifying and setting of the candidate are performed, as shown in Fig. 3.

In step ST101, the lossless decoding unit 52 acquires prediction block size information. The lossless decoding unit 52 decodes the encoded stream stored in the storage buffer 51 and acquires the prediction block size information on the block to be decoded.

In step ST102, the lossless decoding unit 52 distinguishes whether or not this corresponds to case S0. In the case of the prediction block size which is a size of the block to be decoded being equal to or smaller than 8x8 pixels, the lossless decoding unit 52 distinguishes that this corresponds to the case S0, proceeds to step ST103, and in the case of the prediction block size being not equal to or smaller than 8x8 pixels, proceeds to step ST104.

In step ST103, the lossless decoding unit 52 decides a candidate of the case S0 to the prediction motion vector. The lossless decoding unit 52 decides the motion vector MV_A (or motion vector MVmd) which is a candidate of the case S0 to be the prediction motion vector and proceeds to step ST109.

In step ST104, the lossless decoding unit 52 distinguishes whether or not this corresponds to case S1. In the case of the prediction block size being equal to or smaller than 16x16 pixels, the lossless decoding unit 52 distinguishes that this corresponds to case S1, proceeds to step ST105, and in the case of the prediction block size being not equal to or smaller than 16x16 pixels, proceeds to step ST107.

In step ST105, the lossless decoding unit 52 acquires the prediction motion vector selecting information. The lossless decoding unit 52 decodes the encoded stream stored in the storage buffer 51 and acquires the prediction motion vector selecting information on the block to be decoded.

In step ST106, the lossless decoding unit 52 decides a prediction motion vector from the candidates of case S1. The lossless decoding unit 52 decides the prediction motion vector indicated in the prediction motion vector selection information in case S1, and proceeds to step ST109. For example, in the case of the prediction motion vector information being flag "0", the lossless decoding unit 52 takes the motion vector MV_A as a prediction motion vector. Also, in the case of the prediction motion vector information being flag "1", the lossless decoding unit 52 takes the motion vector MV_C as a prediction motion vector.

In step ST107, the lossless decoding unit 52 acquires the prediction motion vector selecting information. The lossless decoding unit 52 decodes the encoded stream stored in the storage buffer 51 and acquires the prediction motion vector selecting information on the block to be decoded.

In step ST108, the lossless decoding unit 52 decides a prediction motion vector from the candidates of case S2. The lossless decoding unit 52 decides the candidate indicated in the prediction motion vector selecting information in case S2 for the prediction motion vector, and proceeds to step ST109. For example, in the case of the prediction motion vector information being flag "0", the lossless decoding unit 52 takes the motion vector MV_A as a prediction motion vector. In the case of the prediction motion vector information being flag "1", the lossless decoding unit 52 takes the motion vector MV_B as a prediction motion vector. In the case of the prediction motion vector information being flag "2", the lossless decoding unit 52 takes the motion vector MV_C as a prediction motion vector. Also, in the case of the prediction motion vector information being flag "3", the lossless decoding unit 52 takes motion vector MV_co as a prediction motion vector.

In step ST109, the lossless decoding unit 52 performs motion vector calculation processing. The lossless decoding unit 52 adds the prediction motion vector decided in steps ST103, 106, and 108 to the difference motion vector of the block to be decoded obtained by performing lossless decoding of the encoded stream, and calculates a motion vector of the block to be decoded. The lossless decoding unit 52 outputs the calculated motion vector to the motion compensation unit 64.

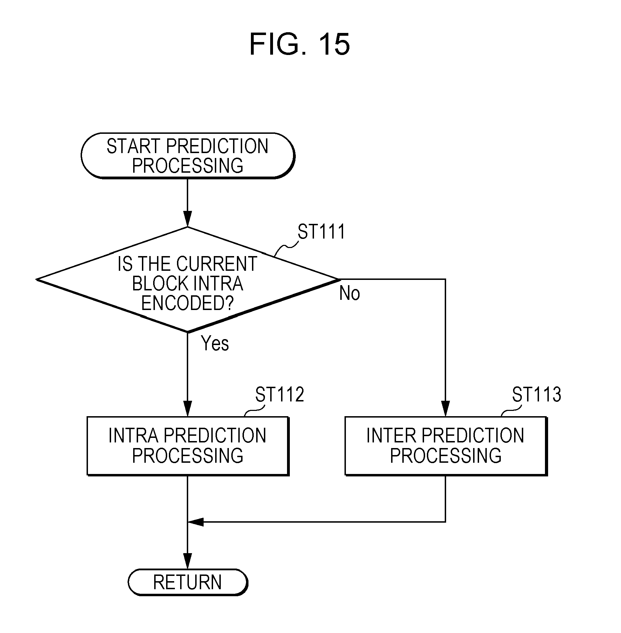

Next, with reference to the flowchart in Fig. 15, prediction processing in step ST88 in Fig. 13 will be described.

In step ST111, the lossless decoding unit 52 determines whether or not the current block has been intra encoded. In the event of the prediction mode information obtained by performing lossless decoding being intra prediction mode information, the lossless decoding unit 52 supplies the prediction mode information to the intra prediction unit 63 and proceeds to step ST112. Also, in the event of the prediction mode information not being intra prediction mode information, the lossless decoding unit 52 supplies the prediction mode information to the motion compensation unit 64, and proceeds to step ST113.

In step ST112, the intra prediction unit 63 performs intra prediction processing. The intra prediction unit 63 performs intra prediction using decoded image data and prediction mode information supplied via the selector 62, and generates prediction image data.

In step ST113, the motion compensation unit 64 performs inter prediction processing. The motion compensation unit 64 performs motion compensation of the decoded image data supplied via the selector 62, based on the prediction mode information and motion vector from the lossless decoding unit 52. Furthermore, the motion compensation unit 64 outputs the prediction image data generated by motion compensation to the selector 65.

Thus, with the image decoding device and method of the present invention, the candidate of the prediction motion vector is set according to the size of the prediction block size, and from the candidates, a motion vector selected in the image decoding device is decided to be the prediction motion vector. Therefore, with the image decoding device, even if improvement of the encoding efficiency and picture quality is realized by the optimal motion vector being selected from the candidates of the prediction motion vectors set according to the size of the prediction block size, decoding of the encoded stream can be correctly performed at the image encoding device.

<8. Other Prediction Method of Motion Vector>

Now, with the above-described motion vector prediction method, candidates of the prediction motion vector are provided according to the prediction block size, and of the candidates, the motion vector of which the encoding efficiency is best is decided to be a prediction motion vector. The candidates of the prediction motion vector, however, may be set according to difference of the motion vectors of the adjacent blocks which have been encoded or have been decoded, and the arrangement is not limited to the prediction block size. Furthermore, the candidates of the prediction motion vector may be provided according to difference of the adjacent blocks and the prediction block size.

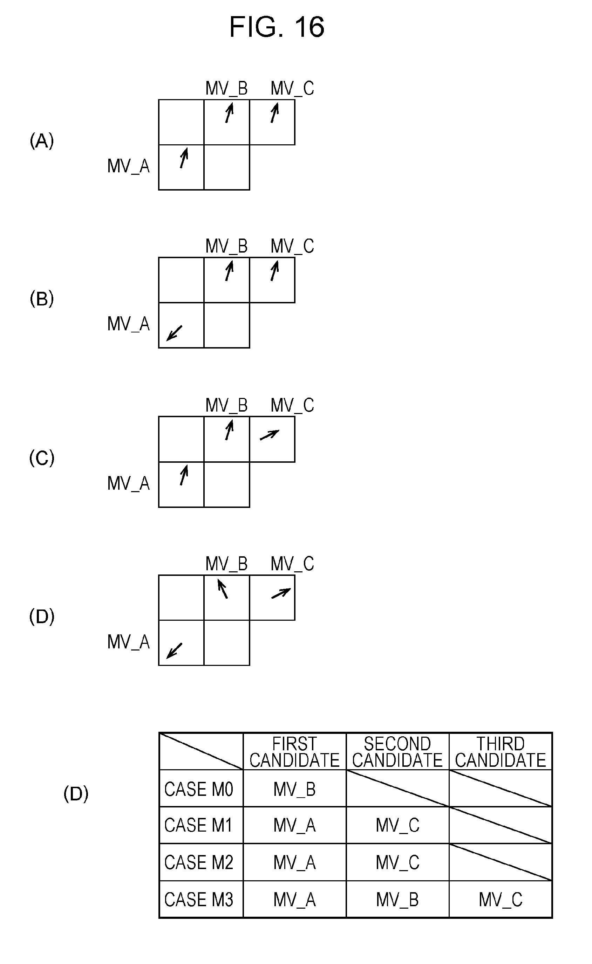

Fig. 16 illustrates case classifying according to difference of the motion vectors of the adjacent blocks and the candidates of the prediction motion vector in each case.

As shown in (A) in Fig. 16, let us say that case M0 is a case where there are few differences among the motion vector MV_A of the adjacent block on the left side, motion vector MV_B of the adjacent block on the upper side, and motion vector MV_C of the adjacent block on the upper-right side. Also, as shown in (B) in Fig. 16, let us say that case M1 is a case where, among the motion vector MV_A, motion vector MV_B, and motion vector MV_C, the difference between the motion vector MV_A and other motion vectors is greater than a threshold set beforehand. Also, as shown in (C) in Fig. 16, let us say that case M2 is a case where, among the motion vector MV_A, motion vector MV_B, and motion vector MV_C, the difference between the motion vector MV_C and other motion vectors is greater than a threshold. Furthermore, as shown in (D) in Fig. 16, let us say that with case M3, with each of the motion vector MV_A, motion vector MV_B, and motion vector MV_C, the difference of the motion vectors is greater than the threshold.

Thus, case classifying is performed according to the difference of the motion vector of the adjacent block, and as shown in (E) in Fig. 16, the candidates of the prediction motion vectors are set in each case. With the setting of the candidates of the prediction motion vectors, each of the motion vectors where difference which exceeds the threshold which has been set beforehand has occurred, is taken as a candidate of the prediction motion vector.

In case M0, there are few differences of the motion vectors among adjacent blocks, so any one of the motion vector of the adjacent blocks is taken as the candidate of the prediction motion vector. For example, the motion vector MV_B of the adjacent block on the upper side is taken as the candidate of the prediction motion vector. Alternatively, the motion vectors of other adjacent blocks may be also taken as a candidate.

In case M1, a motion vector where difference which exceeds the threshold set beforehand has occurred, for example the motion vector MV_A of the left-side adjacent block, is taken as the first candidate, and the motion vector MV_C of the upper-right side adjacent block is taken as the second candidate. Note that even if the difference between the motion vector MV_A and motion vector MV_B exceeds the threshold, the difference between the motion vector MV_B and motion vector MV_C is small, so either of the motion vector MV_B and motion vector MV_C may be taken as a candidate.

In case M2, for example the motion vector MV_A of the adjacent block on the left side is taken as the first candidate, and the motion vector MV_C of the adjacent block on the upper-right side is taken as the second candidate.

In case M3, the difference of the motion vector between each adjacent block exceeds the threshold, for example, so the motion vector MV_A of the adjacent block on the left side is taken as the first candidate, the motion vector MV_B of the adjacent block on the upper side is taken as the second candidate, and the motion vector MV_C of the adjacent block on the upper-right side is taken as the third candidate.

<9. Other Configuration of Lossless Encoding Unit>

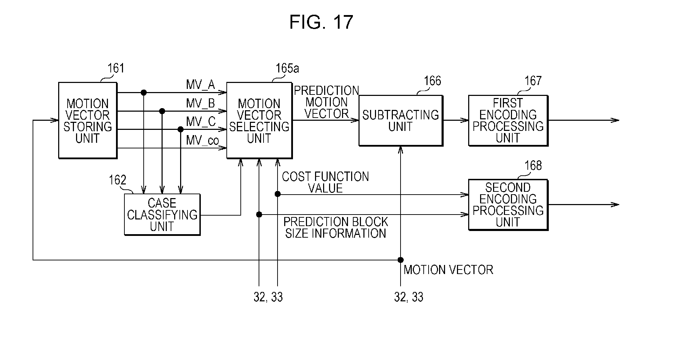

Fig. 17 illustrates another configuration regarding motion vectors at the lossless encoding unit. The lossless encoding unit 16 includes a motion vector storage unit 161, a case classifying unit 162, a motion vector selecting unit 165a, a subtracting unit 166, a first encoding processing unit 167, and a second encoding processing unit 168.

The motion vector storage unit 161 stores motion vector of each block to decide a prediction motion vector using a motion vector of an adjacent block where encoding has been performed before the block to be encoded. Note that when handling direct mode, the motion vector storage unit 161 stores the motion vector of the same block as with the block to be encoded in the reference picture.

The case classifying unit 162 performs case classifying according to the difference of the motion vector of the adjacent block and supplies the case classifying result to the motion vector selecting unit 165a.

The motion vector selecting unit 165a sets, based on the case classifying result, candidates of the prediction motion vectors from the motion vectors of the adjacent blocks stored in the motion vector storage unit 161 and the motion vector of the same block as with the block to be encoded in the reference picture. Also, the motion vector selection unit 165a decides, based on the cost function values supplied from the prediction/compensation unit 32, a prediction motion vector from the candidates of the prediction motion vectors. The motion vector selecting unit 165a outputs the decided prediction motion vector to the subtracting unit 166. Also, in the event of performing case classifying according to the prediction block size as well, the motion vector selecting unit 165a sets, based on the prediction block size information and case classifying result, candidates of the prediction motion vectors from the motion vectors of the adjacent blocks stored in the motion vector storage unit 161 and the motion vector of the same block as with the block to be encoded in the reference picture. The prediction motion vector decided at the motion vector selecting unit 165a is output to the subtracting unit 166. For example, in the case of the prediction block size being equal to or smaller than 16x16 pixels, case classifying is performed according to the prediction block size, and in the case of the prediction block size being 16x16 pixels or greater, case classifying is performed according to the difference in motion vectors of the adjacent blocks, with the candidates of the prediction motion vectors being set in each case. Thus, in the event of the prediction block size being greater and the prediction precision decreasing, performing case classifying according to the difference of the motion vector may be performed, the number of the candidate decreases when the difference of the motion vector of the adjacent block is small, so the prediction motion vector can be decided efficiently.

The subtracting unit 166 calculates the difference motion vector which is the difference between the motion vector indicated in the motion vector information from the motion prediction/compensation unit 32 or the prediction image/ optimal mode selecting unit 33, and the prediction motion vector output from the motion vector selecting unit 165a. The subtracting unit 166 outputs the difference motion vector information indicating the calculated difference motion vector in the first encoding processing unit 167.

The first encoding processing unit 167 performs encoding of the difference motion vector information using a VLC table or an arithmetic code. Also, the second encoding processing unit 168 performs encoding of the prediction block size information and prediction motion vector selecting information using a VLC table or an arithmetic code. The information encoded in the first encoding processing unit 167 and second encoding processing unit 168 is added to the header information of the encoded stream as described above.

<10. Operation of Other Configuration of Lossless Encoding Unit>

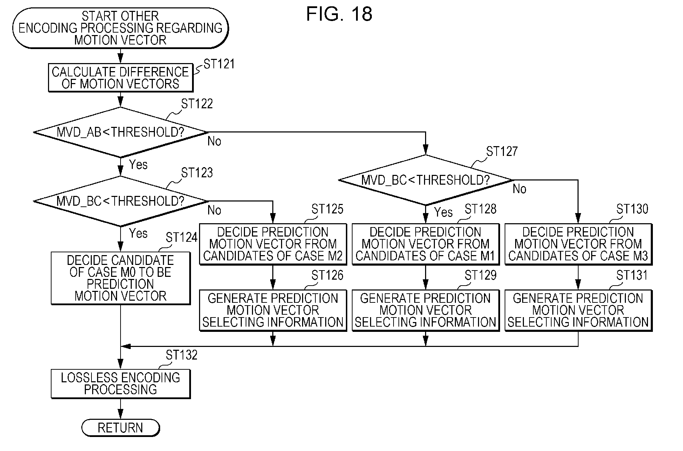

Next, other encoding processing regarding motion vector performed at the lossless encoding unit 16 will be described, with reference to the flowchart in Fig. 18. Note that Fig. 18 illustrates a case where case classifying and setting of the candidate has been performed, as shown in Fig. 16. Also, in the event of the candidate of the prediction motion vector being provided according to the difference of the motion vector of the adjacent block and the prediction block size, for example in the case of the prediction block size of the block to be encoded being larger than 16x16 pixels, the processing in Fig. 18 may be performed.

In step ST121, the lossless encoding unit 16 calculates the difference between the motion vectors of the adjacent blocks. The lossless encoding unit 16 calculates, for example, the difference motion vector MVD_AB between the motion vector MV_A of the adjacent block on the left side and motion vector MV_B of the adjacent block on the upper side. Also, the lossless encoding unit 16 calculates the difference motion vector MVD_BC between the motion vector MV_B of the adjacent block on the upper side and the motion vector MV_C of the adjacent block on the upper-right side.

In step ST122, the lossless encoding unit 16 distinguishes whether or not the difference motion vector MVD_AB is smaller than the threshold. In the event that a horizontal component MVD_ABx of the difference motion vector MVD_AB is smaller than the threshold Thabx, and a vertical component MVD_ABy of the difference motion vector MVD_AB is smaller than the threshold Thaby, the lossless encoding unit 16 proceeds to step ST123. Also, the lossless encoding unit 16 proceeds to step ST127 in other cases.

In step ST123, the lossless encoding unit 16 distinguishes whether or not the difference motion vector MVD_BC is smaller than the threshold. In the event that a horizontal component MVD_BCx of the difference motion vector MVD_BC is smaller than the threshold Thbcx, and a vertical component MVD_BCy of the difference motion vector MVD_BC is smaller than the threshold Thbcy, the lossless encoding unit 16 proceeds to step ST124. Also, the lossless encoding unit 16 proceeds to step ST125, in other cases.

In step ST124, the lossless encoding unit 16 decides a candidate of case M0 to the prediction motion vector. This corresponds to case M0 when the conditions of step ST122 and step ST123 are met, so the lossless encoding unit 16 decides the motion vector MV_B which is a candidate of case M0 to be the prediction motion vector, and proceeds to step ST132.

In step ST125, the lossless encoding unit 16 decides the prediction motion vector from the candidate of the case M2. This corresponds to case M2 when the conditions of step ST122 being met but step ST123 not being met, so the lossless encoding unit 16 decides the prediction motion vector from the candidates of the case M2. With the lossless encoding unit 16, when case M2, motion vector MV_A and motion vector MV_C are taken as the candidate of the prediction motion vector as shown in Fig. 16. Therefore, the lossless encoding unit 16 compares the cost function values when the motion vector MV_A which is the first candidate is used and the motion vector MV_C which is the second candidate is used, to decide the motion vector of which the cost function value is smallest to be the prediction motion vector.

In step ST126, the lossless encoding unit 16 generates prediction motion vector selecting information. The lossless encoding unit 16 generates the prediction motion vector selecting information indicating the prediction motion vector decided in step ST125. For example, the lossless encoding unit 16 uses a flag as prediction motion vector selecting information. With the lossless encoding unit 16, when the motion vector MV_A is decided to be the prediction motion vector, the flag is set to be "0", and when the motion vector MV_C is decided to be the prediction motion vector, the flag is set to be "1" and proceeds to step ST132.

Proceeding from step ST122 to step ST127, the lossless encoding unit 16 distinguishes whether or not the difference motion vector MVD_BC is smaller than the threshold. In the event that horizontal component MVD_BCx of the difference motion vector MVD_BC is smaller than the threshold Thbcx and vertical component MVD_BCy of the difference motion vector MVD_BC is smaller than the threshold Thbcy, the lossless encoding unit 16 proceeds to step ST128. Also, the lossless encoding unit 16 proceeds to step ST130 in other cases.

In step ST128, the lossless encoding unit 16 decides the prediction motion vector from case M1 candidates. This corresponds to case M1 when a condition of step ST127 is met without meeting a condition of step ST122, so the lossless encoding unit 16 decides the prediction motion vector from candidates of the case M1. With the lossless encoding unit 16, when being case M1, the motion vector MV_A and motion vector MV_C are taken as the candidate of the prediction motion vector as shown in Fig. 16. Therefore, the lossless encoding unit 16 compares a cost function value when the motion vector MV_A which is the first candidate is used to a cost function value when the motion vector MV_C which is the second candidate is used, and decides the motion vector of which the cost function value is smallest to be the prediction motion vector.

In step ST129, the lossless encoding unit 16 generates prediction motion vector selecting information. The lossless encoding unit 16 generates the prediction motion vector selecting information indicating the prediction motion vector decided in step ST128. For example, the lossless encoding unit 16 uses a flag as prediction motion vector selecting information. The lossless encoding unit 16 sets, when the motion vector MV_A is decided to be the prediction motion vector, the flag to be "0", and when the motion vector MV_C is decided to be the prediction motion vector, the flag to be "1", and proceeds to step ST132.

In step ST130, the lossless encoding unit 16 decides the prediction motion vector from case M3 candidates. This corresponds to case M3 when the conditions of step ST122 and step ST127 are not met, so the lossless encoding unit 16 decides the prediction motion vector from a candidate of the case M3. The lossless encoding unit 16 is, when case M3, motion vector MV_A, motion vector MV_B, and motion vector MV_C are taken as the candidates of the prediction motion vectors as shown in Fig. 16. Therefore, the lossless encoding unit 16 compares the cost function value when the motion vector MV_A which is the first candidate is used, the cost function value when the motion vector MV_ B which is the second candidate is used, and the cost function value when the motion vector MV_C which is the third candidate. The lossless encoding unit 16 decides, based on the comparison result, the motion vector where the cost function value is smallest, to be the prediction motion vector.

In step ST131, the lossless encoding unit 16 generates prediction motion vector selecting information. The lossless encoding unit 16 generates the prediction motion vector selecting information indicating the prediction motion vector decided in step ST130. For example, the lossless encoding unit 16 uses a flag as prediction motion vector selecting information. The lossless encoding unit 16 sets a flag to "0" when motion vector MV_A is decided to be the prediction motion vector. Also, the lossless encoding unit 16 sets, when the motion vector MV_B is decided to be the prediction motion vector, the flag to be "1", and when the motion vector MV_C is decided to be the prediction motion vector, the flag to be "2" and proceeds to step ST132.

In step ST132, the lossless encoding unit 16 performs lossless encoding processing. The lossless encoding unit 16 performs lossless encoding of the difference between prediction motion vector and motion vector of the blocks to be encoded decided in steps ST124, 125, 128, and 130. Also, the lossless encoding unit 16 performs lossless encoding on the information indicating the prediction motion vector selecting information and prediction block size.

Thus, with the image encoding device and method of the present application, of the candidates, a candidate of the prediction motion vector for the motion vector where the encoding efficiency is best is set and decided for the prediction motion vector, according to the difference of the motion vector of the adjacent block. Therefore, improvement of the encoding efficiency and image quality can be improved. Also, as the case M0, in the case where there exists a candidate of the prediction motion vector, the prediction motion vector selecting information is unnecessary. Therefore, only in the case where there exists multiple candidates of the prediction motion vector is the prediction motion vector selecting information transmitted, thereby further improving encoding efficiency.

<11. Other Configuration of Lossless Decoding Unit>

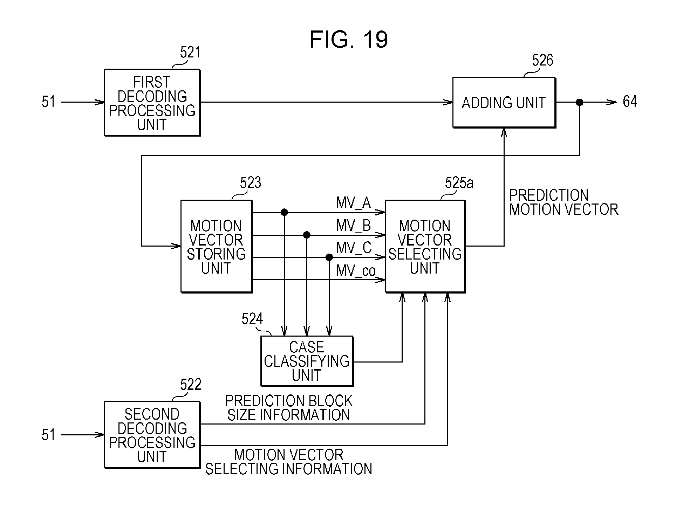

Fig. 19 illustrates another configuration regarding motion vectors at the lossless decoding unit. The lossless decoding unit 52 includes a first decoding processing unit 521, a second decoding processing unit 522, a motion vector storage unit 523, a case classifying unit 524, a motion vector selecting unit 525a, and an adding unit 526.

The first decoding processing unit 521 performs decoding process corresponding to the encoding which has performed in the first encoding processing unit 167. The first decoding processing unit 521 performs lossless decoding processing of the encoded stream using a VLC table or an arithmetic code, and generates difference motion vector information.

The second decoding processing unit 522 performs decoding processing corresponding to the encoding which has performed in the second encoding processing unit 168. The second decoding processing unit 522 performs lossless decoding process of the encoded stream using a VLC table or an arithmetic code, and generates prediction block size information, prediction motion vector selecting information and the like.

The motion vector storage unit 523 stores the motion vector in each block to decide a prediction motion vector using the motion vectors of the adjacent blocks where encoding has been performed before the block to be encoded. Note that the motion vector storage unit 523 stores the motion vector of the same block as with the block to be encoded in the reference picture when corresponding to a direct mode as well.

The case classifying unit 524 performs case classifying according to the difference of the motion vector of the adjacent block, and this case classifying equates with the case classifying unit 162 of the encoding side. This case classifying equates with the case classifying unit 162 of the encoding side.

The motion vector selecting unit 525a sets, based on the case classifying result, the candidates of the prediction motion vectors from the motion vectors of adjacent blocks stored in the motion vector storage unit 523 and the same motion vector as with the block to be encoded in the reference picture. The setting of the candidate of this prediction motion vector equates with the motion vector selecting unit 165a of the encoding side. Furthermore, the motion vector selecting unit 525a selects, based on the prediction motion vector selecting information output from the second decoding processing component 522, motion vector from the candidates of the prediction motion vectors and outputs to the adding unit 526 as a prediction motion vector. Also, the motion vector selecting unit 525a sets, in the event of performing the case classifying according to the prediction block size as well, based on the prediction block size information, case classifying result and prediction motion vector selecting information, candidates of the prediction motion vectors from the motion vectors of the adjacent blocks stored in the motion vector storage unit 523. Furthermore, the motion vector selecting unit 525a decides a prediction motion vector from the candidates of the prediction vectors, based on the prediction vector selecting information, and outputs to the adding unit 526. Thus, in the event that the prediction block size is larger than 16x16 pixels, for example, even if case classifying according to the difference of the motion vectors of the adjacent blocks is performed and candidates of the prediction motion vector in each case are set, and the prediction motion vector where the encoding efficiency is best is decided, decoding processing can be realized using this prediction motion vector in the image decoding device.

The adding unit 526 adds the prediction motion vector which output from the motion vector selecting unit 525a to the difference motion vector indicated in the difference motion vector information output from the first decoding processing unit 521. The adding unit 526 calculates the motion vector of the block to be encoded and outputs to the motion compensation unit 64, by adding difference motion vector to the prediction motion vector.

<12. Operation of Other Configuration of Lossless Decoding Unit>

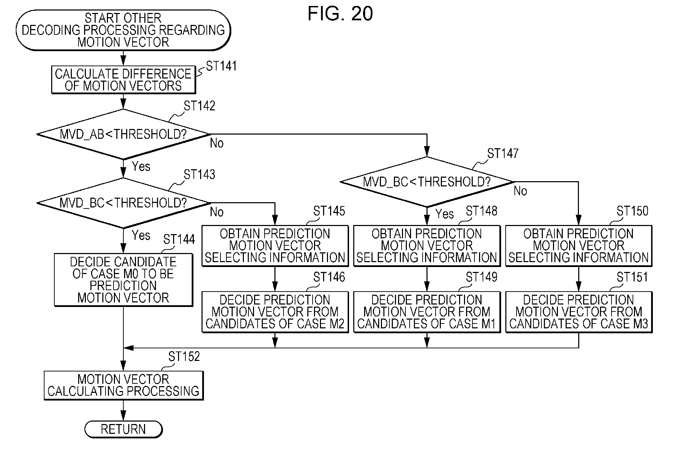

Next, other decoding processing regarding motion vector which is performed at the lossless decoding unit 52 will be described by way of the flowchart of Fig. 20. Note that Fig. 20 illustrates a case where case classifying and setting of candidates are performed, as shown in Fig. 16. Also, in image encoding, when the processing in Fig. 18 is performed in the event that the prediction block size of the block to be encoded is larger than 16x16 pixels, for example, the processing in Fig. 20 is performed if the prediction block size indicated in the prediction mode information is larger than 16x16 pixels.

In step ST141, the lossless decoding unit 52 calculates the difference of the motion vector of the adjacent block which has been decoded. For example, the lossless decoding unit 52 calculates the difference motion vector MVD_AB between the motion vector MV_A of the adjacent block on the left side and motion vector MV_B of the adjacent block on the upper side. Also, the lossless decoding unit 52 calculates the difference motion vector MVD_BC between the motion vector MV_B of the adjacent block on the upper side and motion vector MV_C of the adjacent block on the upper-right side.

In step ST142, the lossless decoding unit 52 distinguishes whether or not the difference motion vector MVD_AB is smaller than the threshold. In the event that horizontal component MVD_ABx of the difference motion vector MVD_AB is smaller than the threshold Thabx, and vertical component MVD_ABy of the difference motion vector MVD_AB is smaller than the threshold Thaby, the lossless decoding unit 52 proceeds to step ST143. Also, in other cases, the lossless decoding unit 52 proceeds to step ST147.

In step ST143, the lossless decoding unit 52 distinguishes whether or not difference motion vector MVD_BC is smaller than the threshold. In the event that horizontal component MVD_BCx of the difference motion vector MVD_BC is smaller than the threshold Thbcx, and vertical component MVD_BCy of the difference motion vector MVD_BC is smaller than the threshold Thbcy, the lossless decoding unit 52 proceeds to step ST144. Also, in other cases, the lossless decoding unit 52 proceeds to step ST145.

In step ST144, the lossless decoding unit 52 decides a candidate of case M0 to be the prediction motion vector. This corresponds to case M0 when a condition of step ST142 and step ST143 is met, so the lossless decoding unit 52 decides the motion vector MV_B which is the candidate of case M0 to be the prediction motion vector and proceeds to step ST152.

In step ST145, the lossless decoding unit 52 acquires the prediction motion vector selecting information. The lossless decoding unit 52 performs decoding of encoded stream stored in the storage buffer 51 and acquires the prediction motion vector selecting information on the block to be decoded.

In step ST146, the lossless decoding unit 52 decides the prediction motion vector from the candidates of case M2. This corresponds to case M2 when a condition of step ST142 is met and a condition of step ST143 is not met, so the lossless decoding unit 52 decides the candidate indicated in the prediction motion vector selecting information in case M2 to be the prediction motion vector. For example, when the prediction motion vector selecting information indicates the flag "0", the lossless decoding unit 52 decides the motion vector MV_A to be the prediction motion vector. Also, when the prediction motion vector selecting information indicates the flag "1", the lossless decoding unit 52 decides the motion vector MV_C to be the prediction motion vector.

When proceeding from step ST142 to step ST147, the lossless decoding unit 52 distinguishes whether or not the difference motion vector MVD_BC is smaller than the threshold. In the event that horizontal component MVD_BCx of the difference motion vector MVD_BC is smaller than the threshold Thbcx, and vertical component MVD_BCy of the difference motion vector MVD_BC is smaller than the threshold Thbcy, the lossless decoding unit 52 proceeds to step ST148. Also, the lossless decoding unit 52 proceeds to step ST150 in other cases.

In step ST148, the lossless decoding unit 52 acquires the prediction motion vector selecting information. The lossless decoding unit 52 performs decoding of the encoded stream stored in the storage buffer 51 and acquires the prediction motion vector selecting information on the block to be decoded.

In step ST149, the lossless decoding unit 52 decides prediction motion vector from the candidates of the case M1. This corresponds to case M1 when a condition of step ST142 is not met and a condition of step ST143 is met, so the lossless decoding unit 52 decides the candidate indicated in the prediction motion vector selecting information in case M1 to be the prediction motion vector. For example, in the event of the prediction motion vector selecting information illustrating flag "0", the lossless decoding unit 52 decides the motion vector MV_A to be the prediction motion vector. Also, in the event of the lossless decoding unit 52 indicating a flag "1", the lossless decoding unit 52 decides the motion vector MV_C to be the prediction motion vector.

In step ST150, the lossless decoding unit 52 acquires the prediction motion vector selecting information. The lossless decoding unit 52 decodes the encoded stream stored in the storage buffer 51 and acquires the prediction motion vector selecting information on the block for the decoding.

The lossless decoding unit 52 decides, from candidates of the case M3, to be the prediction motion vector in step ST151. This corresponds to case M3 when conditions of step ST142 and step ST147 are not met, so the lossless decoding unit 52 decides the candidate indicated in the prediction motion vector selecting information in case M3 to be the prediction motion vector. For example, the lossless decoding unit 52 decides, when the prediction motion vector selecting information indicates the flag "0", a prediction motion vector MV_A to be the prediction motion vector, and when the prediction motion vector selecting information indicates the flag "1", decides the prediction motion vector MV_B to be the prediction motion vector. Also, in the event that the prediction motion vector selecting information indicates the flag "2", the lossless decoding unit 52 decides the motion vector MV_C to be the prediction motion vector.

In step ST152, the lossless decoding unit 52 performs motion vector calculation processing. The lossless decoding unit 52 adds the prediction motion vector decided in steps ST144, 146, 149, and 151, and the difference motion vector of the block to be decoded, obtained by performing lossless decoding of the encoded stream, and calculates the motion vector of the block to be decoded. The lossless decoding unit 52 outputs the calculated motion vector to the motion compensation unit 64.

Thus, with the image decoding device and method of the present invention, candidates of prediction motion vectors are set according to the difference of the motion vectors of the adjacent blocks which have been decoded, and from the candidates, a motion vector selected at the image encoding device is decided to be the prediction motion vector. Accordingly, even if improvement of the encoding efficiency and picture quality is realized by the optimal motion vector being selected from the candidates of the prediction motion vectors set according to difference in motion vectors of adjacent blocks, decoding of the encoded stream can be correctly performed at the image encoding device. Also, case classifying is performed in accordance with the difference in motion vectors of adjacent blocks, so information relating to adjacent blocks does not need to be included in the encoded stream.

<13. Other Prediction Method of Motion Vector>

Next, as another prediction method of the motion vector, a case will be described where, based on the motion vectors of the adjacent blocks which have been encoded or decoded, continuity of the block where the equivalent motion occurs is distinguished, and candidates of the prediction motion vectors are provided based on the distinguishing result.

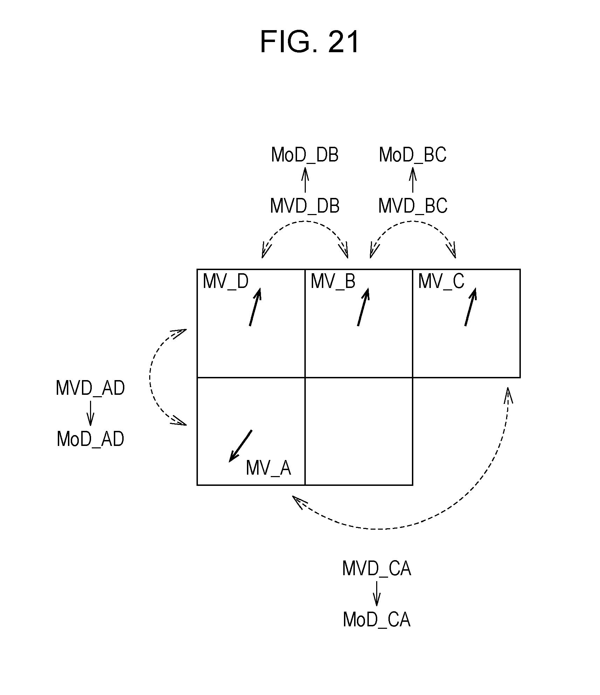

Fig. 21 is a diagram to describe case classifying according to the continuity in blocks where equivalent motion occurs. The decision of the continuity of blocks where equivalent motion occurs is performed using the difference of motion vectors of the blocks next to each other between adjacent blocks. Note that, in the determination of the continuity, the difference of the motion vectors between an adjacent block located at the upper-right side and an adjacent block located at the left side may be also included. In the event that two blocks indicate equivalent motion, the size (quantity of motion) of the calculated difference motion vector is small. Therefore, distinguishing of the continuity is made that when the size of the difference motion vector between two blocks is smaller than a threshold, these are blocks where equivalent motion is occurring, and when the size of the difference motion vector is greater than a threshold, these are blocks where different motion is occurring.

For example, with distinguishing of continuity, the difference motion vector MVD_AD between motion vector MV_A of the adjacent block on the left side and motion vector MV_D of and the adjacent block of the upper-left side is calculated, as shown in Fig. 21. When this difference motion vector MVD_AD is equal to or smaller than threshold Tjad, the determination result (MoD_AD) is taken as "0", and when this difference motion vector MVD_AD is threshold Tjad or greater, the determination result (MoD_AD) is taken as "1". Note that the determination result "0" indicates that two blocks are consecutive blocks where equivalent motion occurs. Also, the determination result "1" indicates that two blocks are non-consecutive blocks where different motion occurs.

In the same way, the difference motion vector MVD_DB between motion vector MV_D of the adjacent block on the upper-left side and motion vector MV_B of the adjacent block on the upper side is calculated, and MoD_DB is decided based on the comparison between the difference motion vector MVD_DB and threshold Tjdb. Also, the difference motion vector MVD_BC between the motion vector MV_B of the adjacent block on the upper side and motion vector MV_C of the adjacent block on the upper right side is calculated, and MoD_BC is decided based on the comparison between the difference motion vector MVD_BC and threshold Tjbc. Also, the difference motion vector MVD_CA between the motion vector MV_C of the adjacent block on the upper - right side and motion vector MV_A of the adjacent block on the left side is calculated, and MoD_CA is decided based on the comparison between the difference motion vector MVD_CA and threshold Tjca.

Next, the case classification is performed using MoD_AD, MoD_DB, MoD_BC, and MoD_CA which are the determination results of continuity. Furthermore, the candidates of the prediction motion vector are decided according to the classified cases. Note that candidates of the prediction motion vector are decided in each case by learning beforehand.

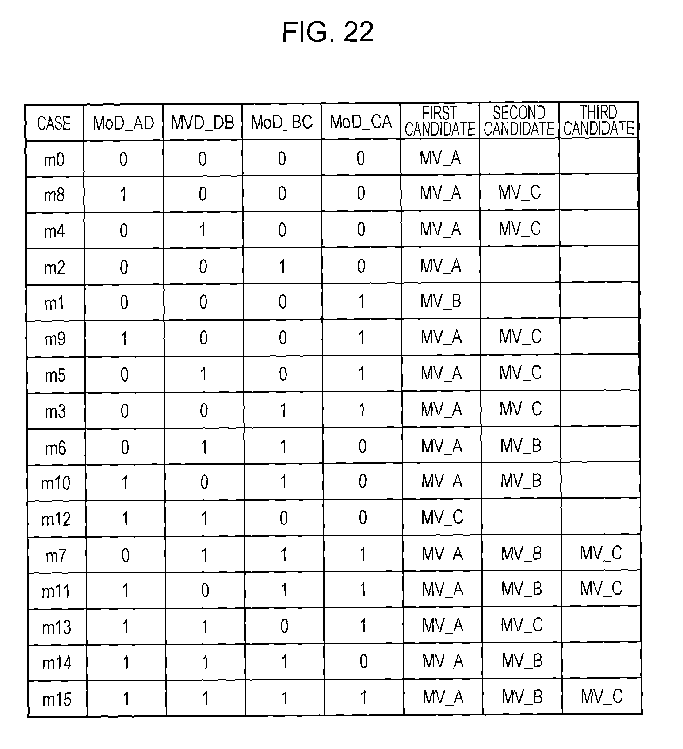

Fig. 22 exemplifies the candidates of the prediction motion vector in each case. For example, the case m0 is a case where MoD_AD = 0, MoD_DB = 0, MoD_BC = 0, and MoD_CA = 0, with the first candidate of the prediction motion vector being taken as the motion vector MV_A. Also, the case m8 is a case where MoD_AD = 1, MoD_DB = 0, MoD_BC = 0, and MoD_CA = 0, with the first candidate of the prediction motion vector being taken as the motion vector MV_A and with the second candidate being taken as the motion vector MV_C. Also, the case m15 is a case where MoD_AD = 1, MoD_DB = 1, MoD_BC =1, and MoD_CA = 1, with the first candidate of the prediction motion vector being taken as the motion vector MV_A, the second candidate of the prediction motion vector being taken as motion vector MV_B, and the second candidate of the prediction motion vector being taken as motion vector MV_C.

<14. Other Configuration and Operation of Lossless encoding Unit>

In the event of providing candidates of prediction motion vectors based on distinguishing results of continuity of blocks where equivalent motion occurs, another configuration regarding motion vectors according to the lossless encoding unit is made as with Fig. 17. Note that the case classifying unit 162 in Fig. 17 performs case classifying based on distinguishing results of the continuity of blocks where equivalent motion occurs, and supplies the case classifying results to the motion vector selecting unit 165a. Also, the motion vector selection unit 165a sets, based on case classification results, candidates of prediction motion vectors as shown in Fig. 22.

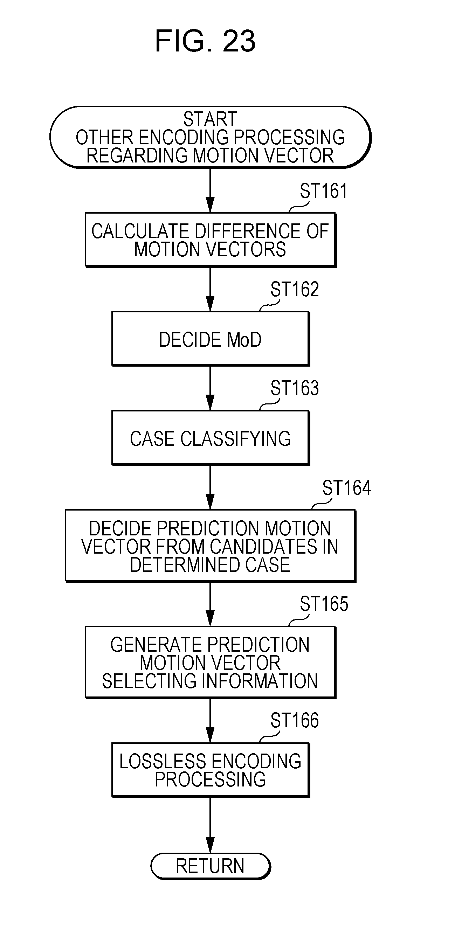

Fig. 23 is a flowchart which illustrates other encoding processing regarding a motion vector, performed at the lossless encoding unit 16.

In step ST161, the lossless encoding unit 16 calculates the difference of motion vectors of adjacent blocks. The lossless encoding unit 16 calculates the difference of the motion vectors of blocks next to each other between adjacent blocks. Also, the lossless encoding unit 16 calculates the difference of the motion vector with adjacent blocks located at the upper-right side and the adjacent block located at the left side. That is, the lossless encoding unit 16 calculates the difference motion vectors MVD_AD, MVD_DB, MVD_BC, and MVD_CA, and proceeds to step ST162.

In step ST162, the lossless encoding unit 16 decides MoD. The lossless encoding unit 16 compares the threshold Tjad to the difference motion vector MVD_AD and decides MoD_AD. When the difference motion vector MVD_AD is threshold Tjad or smaller, the lossless encoding unit 16 takes MoD_AD as "0". Also, the lossless encoding unit 16 takes MoD_AD as "1" when the difference motion vector MVD_AD is greater than the threshold Tjad. In the same way, the lossless encoding unit 16 compares the thresholds Tjdb, Tjbc, Tjca to the difference motion vectors MVD_DB, MVD_BC, MVD_CA, decides MoD_DB, MoD_BC, and MoD_CA, and proceed to step ST163.

In step ST163, the lossless encoding unit 16 performs case classifying. The lossless encoding unit 16 performs case classifying as in Fig. 22 for example, based on values of MoD_AD, MoD_DB, MoD_BC, and MoD_CA, and proceeds to step ST164.

In step ST164 a prediction motion vector is decided from the candidates in a distinguished case. The lossless encoding unit 16 decides a prediction motion vector from the candidates of the prediction motion vector in the case distinguished in step ST163. When the number of candidates of the prediction motion vector is one in a case of distinguishing, the lossless encoding unit 16 decides this candidate to the prediction motion vector. For example, as shown in Fig. 22, in case m0 which is MoD_AD = 0, MoD_DB = 0, MoD_BC = 0, and MoD-CA = 0, the candidate of the prediction motion vector is the one motion vector MV_A. Therefore, the motion vector MV_A is decided to be the prediction motion vector.

When multiple candidates of the prediction motion vector exist in the distinguished case, the lossless encoding unit 16 calculates a cost function value for when each candidate is used, and decides the candidate where the cost function value is the smallest to be the prediction motion vector.

For example, as shown in Fig. 22, in case m8 which is MoD_AD = 1, MoD_DB = 0, MoD_BC = 0, and MoD_CA = 0, the candidates of the prediction motion vector are the two of the motion vectors MV_A and MV_C. Therefore, the lossless encoding unit 16 compares the cost function value when the motion vector MV_A which is the first candidate is used, to the cost function value when the motion vector MV_C which is the second candidate is used, and decides the motion vector where the cost function value is the minimum to be the prediction motion vector.

In step ST165, the lossless encoding unit 16 generates prediction motion vector selecting information. The lossless encoding unit 16 generates the prediction motion vector selecting information indicating the prediction motion vector decided in step ST164. For example, the lossless encoding unit 16 uses a flag as the prediction motion vector selecting information. The lossless encoding unit 16 sets a flag to "0" when the first candidate has been decided to be the prediction motion vector, "1" when the second candidate has been decided to be the prediction motion vector, and "2" when the third candidate has been decided to be the prediction motion vector, and proceeds to step ST166.

In step ST166, the lossless encoding unit 16 performs lossless encoding processing. The lossless encoding unit 16 performs lossless encoding between the prediction motion vector decided in step ST164 and motion vector of the block to be encoded in step ST164. Also, the lossless encoding unit 16 performs lossless encoding on the information indicating the prediction motion vector selecting information and prediction block size and so forth.

Thus, according to the distinguishing result of continuity of the blocks where equivalent motion occurs, candidates of prediction motion vectors are set, and the motion vector where the encoding efficiency is best is decided to be the prediction motion vector out of the candidates. Therefore, improvement of encoding efficiency and image quality can be realized. Also, in the event that there exists a candidate of the prediction motion vector, prediction motion vector selecting information is unnecessary. Therefore, transmitting prediction motion vector selecting information only when multiple candidates of the prediction motion vector exist can further improve encoding efficiency.

<15. Other Configuration and Operation of Lossless decoding Unit>

In the event that a candidate of the prediction motion vector is provided based on the distinguishing result of continuity of blocks where equivalent motion occurs, another configuration regarding motion vectors in the lossless decoding unit is the same as with Fig. 19. Note that the case classifying unit 524 in Fig. 19 performs case classifying based on the distinguishing result of continuity of a blocks where equivalent motion occurs, and supplies the case classifying result to the motion vector selecting unit 525a. Also, the motion vector selecting unit 525a sets candidates of prediction motion vectors as shown in Fig. 22 based on the case classifying result.

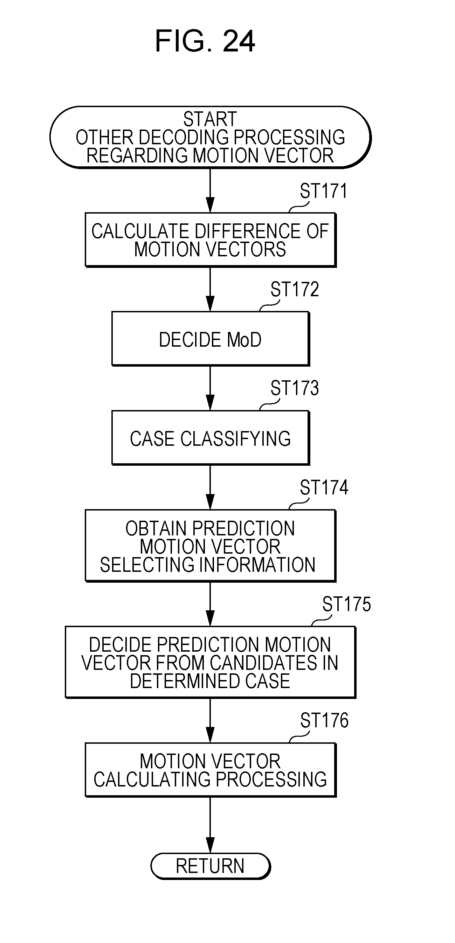

Fig. 24 is a flowchart which indicates other decoding processing regarding the motion vector, performed at the lossless decoding unit 52. Note that, Fig. 24 also illustrates case classifying and the setting of the candidate being performed as shown in Figs. 21 and 22. Also, in the image encoding, when the processing in Fig. 23 is performed in the event that the prediction block size of the block to be encoded is larger than 16x16 pixels, for example, the processing in Fig. 24 is performed in the event the prediction block size indicated in the prediction mode information is larger than 16x16 pixels.

In step ST171, the lossless decoding unit 52 calculates the difference of motion vectors of adjacent blocks which have been decoded. For example, the lossless decoding unit 52 calculates the difference of motion vectors of blocks next to each other between adjacent blocks. Also, the lossless encoding unit 16 calculates the difference of motion vectors between the adjacent block located at the upper right side and the adjacent block located at the left side. That is, the lossless encoding unit 16 calculates the difference motion vectors MVD_AD, MVD_DB, MVD_BC, and MVD_CA, and proceeds to step ST172.

The lossless decoding unit 52 decides MoD in step ST172. The lossless decoding unit 52 compares threshold Tjad with the difference motion vector MVD_AD and decides MoD_AD. When the difference motion vector MVD_AD is threshold Tjad or less, the lossless decoding unit 52 takes MoD_AD as "0". Also, the lossless decoding unit 52 takes MoD_AD as "1" when the difference motion vector MVD_AD is larger than the threshold Tjad. In the same way, the lossless decoding unit 52 compares the difference motion vectors MVD_DB, MVD_BC, MVD_CA and thresholds Tjdb, Tjbc, and Tjca, MoD_DB, MoD_BC, MoD_CA are decided and proceed to step ST173.

In step ST173, the lossless decoding unit 52 performs case classifying. The lossless decoding unit 52 performs case classifying, such as in Figs. 21 and 22 for example, based on the values of MoD_AD, MoD_DB, MoD_BC, and MoD_CA, and proceeds to step ST174.

In step ST174, the lossless decoding unit 52 acquires the prediction motion vector selecting information. The lossless decoding unit 52 performs decoding of the encoded stream stored in the storage buffer 51 and acquires the prediction motion vector selecting information on the block to be decoded and proceeds to step ST175.

In step ST175, the lossless decoding unit 52 decides the prediction motion vector from the candidates in the distinguished case. The lossless decoding unit 52 decides a prediction motion vector based on the prediction motion vector selecting information acquired in step ST174, from the candidates of prediction motion vectors in the decided case in step ST173. When the number of candidates of the prediction motion vector existing is one in the distinguished case, the lossless decoding unit 52 decides this candidate to be the prediction motion vector. For example, in case m0 which is MoD_AD = 0, MoD_DB = 0, MoD_BC = 0, and MoD_CA = 0, the candidate of the prediction motion vector is the one motion vector MV_A. Therefore, the motion vector MV_A is decided to the prediction motion vector.

Also, in the event that there exist multiple candidates of the prediction motion vectors in the distinguished case, the lossless decoding unit 52 decides the candidate of the prediction motion vector to be the prediction motion vector. For example, in case m8 which is MoD_AD = 1, MoD_DB = 0, MoD_BC = 0, and MoD_CA = 0, the candidates of the prediction motion vector are the two of motion vectors MV_A and MV_C. Here, when prediction motion vector selecting information indicates flag "0", the motion vector MV_A which is the first candidate is decided to be the prediction motion vector. Also, when prediction motion vector selecting information indicates flag "1", the motion vector MV_C which is the second candidate is decided to be the prediction motion vector.

The lossless decoding unit 52 performs processes motion vector calculation processing in step ST176. The lossless decoding unit 52 adds the prediction motion vector decided in step ST175 and the difference motion vector of the block to be encoded by performing lossless decoding of the encoded stream, and calculates the motion vector of the block to be decoded. The lossless decoding unit 52 outputs the calculated motion vector to the motion compensation unit 64.

Thus, with the image decoding device and method of the present invention, continuity of blocks where equivalent motion occurs is distinguished regarding decoded adjacent blocks, and, according to the distinguishing result, candidates of prediction motion vectors are set. Furthermore, from the candidates, the motion vector selected at the image encoding device is decided to be the prediction motion vector. Therefore, with the image encoding device, even if the optimal motion vector is selected from candidates set for the prediction motion vector, according to continuity of blocks where equivalent motion occurs, and improvement of encoding efficiency and image quality is realized, decoding of the encoded stream can be correctly performed at the image decoding device. Also, classifying is performed according to difference of motion vectors of the adjacent blocks, so it is not necessary to include the information regarding case classifying in the encoded stream.

<16. Encoding Processing of Prediction Motion Vector Identification Information>

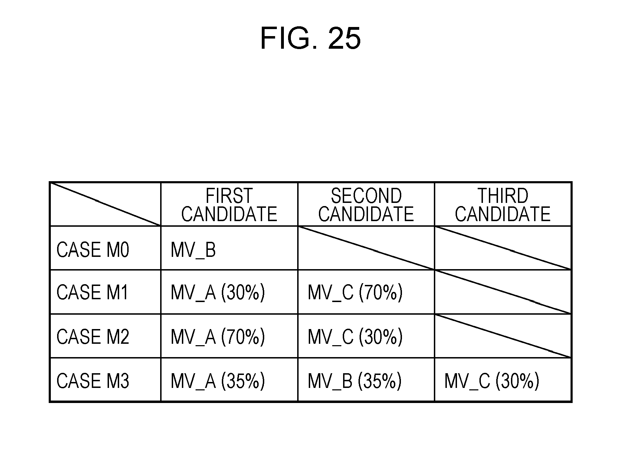

Also, in the event that case classifying is performed according to motion vectors of adjacent blocks, occurrence probability is calculated for each candidate beforehand, and encoding amount can be further reduced at the second encoding processing unit by performing encoding in accordance with the occurrence probability. Fig. 25 exemplifies the occurrence probability for each prediction motion vector candidate. For example, let us say that in case M1, the occurrence probability of the motion vector MV_A is "30%", and the occurrence probability of motion vector MV_C is "70%". Also, let us say that in case M2, the occurrence probability of the motion vector MV_A is "70%", and the occurrence probability of motion vector MV_C is "30%". Furthermore, in case M3, the occurrence probability of the motion vector MV_A is "35%", and the occurrence probability of motion vector MV_B is "35%" and the occurrence probability of the motion vector MV_C is "30%".

In encoding of the prediction motion vector information, when the prediction motion vector is a motion vector of higher occurrence probability, the second encoding processing unit 168 shortens the bit length as compared to a case of being a motion vector with a low occurrence probability. That is, in the case of case M1, in the event that the prediction motion vector is the vector MV_C, encoding is performed so as to be shorten the bit length as compared to a case where the motion vector is MV_A. Also, in the case of case M2, in the event that the prediction motion vector is the vector MV_A, encoding is performed so as to be shorten the bit length as compared to a case where the motion vector is MV_C.

Thus, occurrence probability is calculated for each prediction motion vector candidate beforehand, and the prediction motion vector selecting information indicating a motion vector with a high candidate probability reduces the allocated code amount as compared with prediction motion vector selecting information indicating a motion vector with a low occurrence probability. Thus, compression of the prediction motion vector information can be raised.

<17. Software Processing>

The series of the processing described in the specification can be performed by hardware, software, or a combined configuration of both. In the case where processing by the software is performed, a program in which is recorded a processing sequence is installed in memory within a computer built into dedicated hardware, and is executed. Alternatively, a program may be installed in a general-purpose computer where various types of processing can be performed.

For example, the program can be recorded beforehand in a hard disk or ROM (Read Only Memory) as the recording medium. Alternatively, the program can temporarily or permanently be stored (recorded) in removable recording media such as a flexible disk, CD-ROM (Compact Disc Read Only Memory), MO (Magneto optical) disc, DVD (Digital Versatile Disc), a magnetic disk, and semiconductor memory. Such removable recording media can be provided as so-called packaged software.

Note that in addition to a program being installed onto a computer from removable recording media as described above, the program can be transferred wirelessly to a computer from a download site, or transferred by cable to the computer through a network such as a LAN (Local Area Network)or and the Internet, and a computer may receive the program transferred in that way and may install in a recording medium such as a built-in hard disk or the like.

It goes without saying that the steps describing the program include processing which is performed following the described order in time-sequence, and also include processing which is performed in parallel or individually, even if not necessarily being processed in time-sequence.

<18. Case of Applying to Electronic Devices>

Also, in the above, the H.264/AVC format has used as the encoding format/decoding format, but the present invention can be also applied to the image encoding device/image decoding device which uses an encoding format/ decoding format which performs other motion prediction/compensation processing.

Furthermore, the present invention can be applied to the image encoding device and image decoding device used at the time of receiving image information (bit stream) compressed by orthogonal transform such as discrete cosine transform, as with MPEG, H.26x or the like, and motion compensation via network media such as satellite broadcasting, cable TV (television), the Internet, cellular telephone, or the like, or at the time of processing on a storage medium such as an optical and magnetic disk, and the flash memory.

The above-described image encoding device 10 and image decoding device 50 can be applied to any electronic device.

Examples are described below.

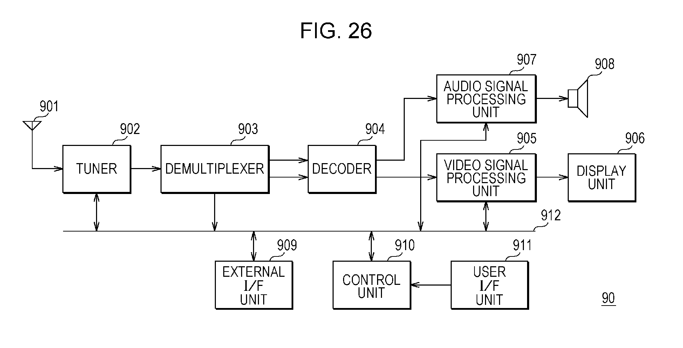

Fig. 26 exemplifies a schematic configuration of a television apparatus to which the present invention has been applied. The television apparatus 90 has an antenna 901, a tuner 902, a demultiplexer 903, a decoder 904, a video signal processing unit 905, a display unit 906, an audio signal processing unit 907, a speaker 908, and external interface unit 909. Furthermore, the television apparatus 90 has a control unit 910, a user interface unit 911 or the like.

The tuner 902 performs demodulation by choosing a desired channel from the broadcast wave signals received at the antenna 901, and outputs the obtained stream to the demultiplexer 903.

The demultiplexer 903 extracts the packet of a video and audio of a program to be viewed from a stream and outputs the data of extracted packets to the decoder 904. Also, the demultiplexer 903 supplies the packets of data such as EPG (Electronic Program Guide) to the control unit 910. Note that in the event that scrambling has been performed, descrambling is performed at a demultiplexer or the like.

The decoder 904 performs decoding process of the packet, and outputs the video data generated by being subjected to decoding processing to the video signal processing unit 905 and audio data to the audio signal processing unit 907.

The video signal processing unit 905 performs video processing according to the noise reduction and user settings, on the video data. The video signal processing unit 905 generates video data for displaying programs on the display unit 906 and image data according to processing based on applications supplied through the network. Also, the video signal processing unit 905 generates video data to display menu screens or the like such as for selection of items, and superimposes this on video data of the program. The video signal processing unit 905 generates driving signals based on the video data generated in this way and drives the display unit 906.

The display unit 906 drives a display device (e.g., liquid crystal display device or the like) based on the driving signal from the video signal processing unit 905 so as to display the video of the program.

The audio signal processing unit 907 subjects the audio data to predetermined processing such as noise reduction and performs audio output by performing D/A converting processing and amplifying processing of the audio data after processing and supplying to the speaker 908.

The external interface unit 909 is an interface to be connected to external equipment or a network, and performs data transmission and reception of such as video data or audio data.

The user interface unit 911 is connected to the control unit 910. The user interface unit 911 is configured of an operation switch or a remote control signal receiver or the like, and supplies operation signals according to user operation to the control unit 910.

The control unit 910 is configured using a CPU (Central Processing Unit), memory or the like. The memory stores programs to be executed by the CPU, and various data necessary for the CPU to perform processing, EPG data, data obtained via a network, and the like. The program stored in the memory is read out by the CPU at a predetermined timing such as at the time of starting up the television apparatus 90 and is executed. The CPU controls each part so that the television apparatus 90 operates according to user operations by executing a program.

Note that with the television apparatus 90, a bus 912 is provided to connect a tuner 902, a demultiplexer 903, a video signal processing unit 905, an audio signal processing unit 907, an external interface unit 909 and a control unit 910.

With the television apparatus thus configured, the function of the image decoding device (image decoding method) of the present application is provided to the decoder 904. Therefore, even if the encoding efficiency and image quality is improved and generating of the encoded stream is performed by using a function of the image encoding device of the present application on the broadcasting station side, decoding of the encoded stream can be correctly performed at the television apparatus.

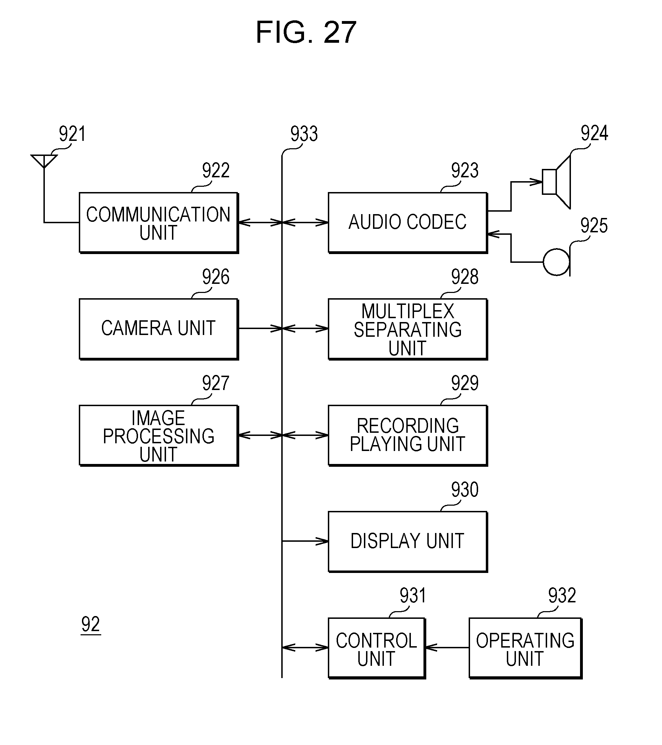

Fig. 27 exemplifies a schematic configuration of the cellular telephone to which the present invention has been applied. The cellular telephone 92 has a communication unit 922, an audio codec 923, a camera unit 926, an image processing unit 927, a multiplex separating unit 928, a record reproduction unit 929, a display unit 930, and a control unit 931. These are connected each other through a bus 933.

Also, an antenna 921 is connected to the communication unit 922, and a speaker 924 and microphone 925 are connected to the audio codec 923. Furthermore, an operating unit 932 is connected to the control unit 931.

The cellular telephone 92 performs various operation such as transmission and reception of audio signals, transmission and reception of email and image data, image shooting, data recording, and so forth, in various modes such as audio call mode or data communication mode.

In an audio call mode, audio signals generated at the microphone 925 are converted to audio data and data compression at the audio codec 923 and supplied to the communication unit 922. The communication unit 922 performs demodulation processing of the audio data and frequency conversion processing of audio data to generate transmission signals. Also, the communication unit 922 supplies transmission signals to the antenna 921 so as to be transmitted to an unshown base station. Also, the communications unit 922 performs amplification, frequency conversion processing, and demodulation processing of reception signals received at the antenna 921 and demodulation processing, and supplies the obtained audio data to the audio codec 923. The audio codec 923 performs data decompression of audio data and conversion to the analog audio signals and outputs to the speaker 924.

Also, in data communication mode, in the event of performing email transmission, the control unit 931 receives text data input by the operation of the operating unit 932 and displays the input text to the display unit 930. Also, the control unit 931 generates email data based on user instructions at the operating unit 932 and supplies to the communication unit 922. The communication unit 922 performs modulation processing of the email data, frequency conversion processing, and so forth, and transmits the obtained transmission signals from the antenna 921. Also, the communication unit 922 performs amplification, frequency conversion processing, and demodulation processing of the reception signals received with the antenna 921, and restores the email data. This email data is supplied to the display unit 930 to display the contents of the email.

Note that the cellular telephone 92 may store the received email data in storage medium in the recording/playback unit 929. The storage medium is any storage medium which is readable/writeable. For example, the storage medium is semiconductor memory such as RAM or built-in flash memory, removable media such as a hard disk, a magnetic disk, an MO disc, an optical disc, USB memory, a memory card, or the like.

In the event that image data is transmitted in a data communication mode, the image data generated at the camera unit 926 is supplied to the image processing unit 927. The image processing unit 927 performs encoding processing of the image data and generates encoded data.

The multiplex separating unit 928 multiplexes encoded data generated at the image processing unit 927 and audio data supplied from the audio codec 923 by a predetermined format and supplies to the communication unit 922. The communication unit 922 performs demodulation processing of the multiplexed data, frequency conversion processing, and the like, and transmits the obtained transmission signals to the antenna 921. Also, the communication unit 922 performs amplification, frequency conversion processing, demodulation processing, or the like of the reception signals received at the antenna 921, and restores the multiplexing data. This multiplexing data is supplied to the multiplex separating unit 928. The multiplex separating unit 928 performs separating of the multiplexing data, and supplies the audio data to the image processing unit 927. The image processing unit 927 performs decoding processing of the encoded data, and generates image data. This image data is supplied to the display unit 930 to display the received image. The audio codec 923 converts the audio data into analog audio signals and supplies to the speaker 924 to output the received audio.

With the cell-phone device thus configured, the image processing unit 927 has a function of the image encoding device (image encoding method) and the image decoding device (image decoding method) of the present application. Therefore, encoding efficiency and image quality can be improved at the time of performing communication of the image data.

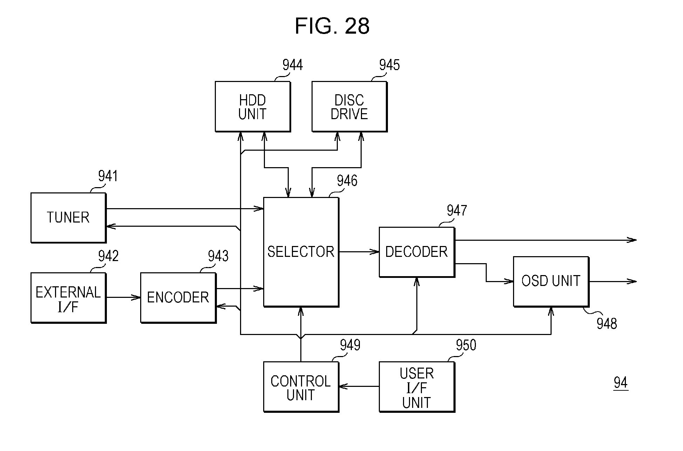

Fig. 28 exemplifies a schematic configuration of the recording playback device to which the present invention has been applied. The recording/playback device 94 records, for example, audio data and video data of the received broadcast program to a recording medium, and provides the recorded data to a user in a timing according to the instructions of the user. Also, an arrangement can be made such that the recording/playback device 94 may acquire, for example, audio data and video data from other devices, so as to record to a recording medium. Furthermore, an arrangement can be made such that the recording/playback device 94 may perform, by decoding audio data and video data recorded in a recording medium to output image display and audio output on monitor devices.

The recording/playback device 94 has a tuner 941, an external interface unit 942, an encoder 943, an HDD (Hard Disk Drive) unit 944, a disk drive 945, a selector 946, a decoder 947, an OSD (On-Screen Display) unit 948, a control unit 949, and a user interface unit 950.

The tuner 941 chooses a station of a desired channel from the broadcast signals received at an unshown antenna. The tuner 941 outputs the encoded stream obtained by demodulating the reception signals of the desired channel to the selector 946.

The external interface unit 942 is configured of at least any one of an IEEE1394 interface, a network interface unit, a USB interface, a flash memory interface, and so forth. The external interface unit 942 is an interface to be connected to an external device and a network, a memory card and the like, and performs data reception of such as video data or audio data to record.

The encoder 943 performs encoding when video data and audio data supplied from the external interface unit 942 are not encoded by a predetermined format and outputs an encoded stream to the selector 946.

The content data such as video or the audio, various programs, other data, or the like are recorded in a built-in hard disk, and the HDD unit 944 also reads out these at the time of playback from the hard disk.

The disk drive 945 performs recording or playback of the signals to a mounted optical disc. An optical disc is, e.g., a DVD disc (DVD-Video, DVD-RAM, DVD-R, DVD-RW, DVD+R, DVD+RW or the like) or a Blu-ray disk or the like.

The selector 946 selects, at the time of the recording of video and audio, either stream from the tuner 941 or encoder 943, and supplies to either of HDD unit 944 and disk drive 945. Also, the selector 946 supplies, at the time of the playback of video and audio, a stream output from the HDD unit 944 or disk drive 945 to the decoder 947.

The decoder 947 performs decoding process of the stream. The decoder 947 supplies the generated video data to the OSD unit 948 by performing decoding processing. Also, the decoder 947 outputs the generated audio data by performing decoding processing.

The OSD unit 948 generates video data to display menu screens or the like such as for the selection of items and superimposes this on the video data output from the decoder 947, and outputs.

The user interface unit 950 is connected to the control unit 949. The user interface unit 950 is configured of an operation switch or a remote control signal receiver or the like and supplies operation signals according to user operations to the control unit 949.

The control unit 949 is configured using a CPU or memory. The memory stores a program executed by CPU and necessary various data when the CPU performing processing. The program stored in the memory is read out at a predetermined timing such as at the time of start of the recording/playback device 94, and executed by the CPU. The CPU controls each part so that the recording/playback device 94 operates in accordance with user operation, by executing a program.

With the recording/playback device thus configured, functions of the image encoding device (image encoding method) of the present application are provided to the encoder 943, functions of the image decoding device (image decoding method) are provided to the decoder 947, and accordingly, encoding efficiency and image quality are improved, thereby performing recording and playback of video efficiently.

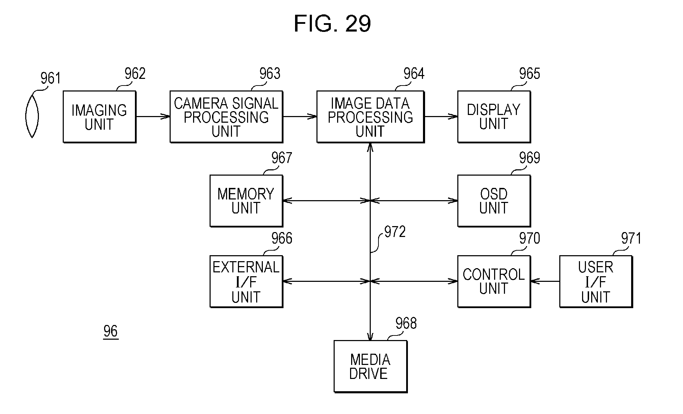

Fig. 29 exemplifies a schematic configuration of an imaging apparatus to which the present invention has been applied. The imaging apparatus 96 images a subject so as to display an image of a subject on a display unit, and record this in a recording medium as image data.

The imaging apparatus 96 has an optical block 961, an imaging unit 962, a camera signal processing unit 963, an image data processing unit 964, a display unit 965, an external interface unit 966, a memory unit 967, a media drive 968, an OSD unit 969, and a control unit 970. Also, a user interface unit 971 is connected to the control unit 970. Furthermore, the image data processing unit 964 and external interface unit 966, memory unit 967, media drive 968, OSD unit 969, and control unit 970 and so forth are connected via a bus 972.

The optical block 961 is configured of a focusing lens, diaphragm mechanism, and so forth. The optical block 961 images an optical image of a subject on an imaging face of the imaging unit 962. The imaging unit 962 is configured using a CCD or CMOS image sensor, and electrical signals corresponding to the optical image is generated by photoelectric conversion and supplied to the camera signal processing unit 963.

The camera signal processing unit 963 performs various kinds of camera signal processing such as KNEE correction and gamma correction, color correction and the like, to the electrical signals supplied from the imaging unit 962. The camera signal processing unit 963 supplies the image data after camera signal processing to the image data processing unit 964.

The image data processing unit 964 performs encoding processing of the image data supplied from the camera signal processing unit 963. The image data processing unit 964 supplies the generated encoded data to the external interface unit 966 and media drive 968 by performing encoding processing. Also, the image data processing unit 964 performs decoding processing of the encoded data supplied from the external interface unit 966 and media drive 968. The image data processing unit 964 supplies the generated image data to the display unit 965 by performing decoding processing. Also, the image data processing unit 964 performs processing to supply the image data supplied from the camera signal processing unit 963 to the display unit 965, and processing to superimpose data for display acquired from the OSD unit 969 onto the image data and supply to the display unit 965.

The OSD unit 969 generates data for display such as a menu screen or the icon made of signs, text or shapes, and outputs to the image data processing unit 964.

For example, the external interface unit 966 is configured of USB input and output terminals, and in a case of performing printing of the image, is connected to a printer. Also, a drive is connected to the external interface unit 966 according to need, and removable media such as a magnetic disk, optical disc, or the like is mounted as appropriate, and a computer program read out therefrom is installed according to need. Furthermore, the external interface unit 966 has a network interface connected to a predetermined network such as a LAN or the Internet. For example, according to the instructions from the user interface unit 971, the control unit 970 reads out encoded data from the memory unit 967 so as to be supplied to the other devices connected via a network from the external interface unit 966. Also, the control unit 970 acquires encoded data and image data supplied from other devices via a network, through the external interface unit 966, so as to supply this to the image data processing unit 964.

For example, as for a recording medium driven by the media drive 968, any removable media which is readable and writable may be used, such as a magnetic disk, an MO disk, an optical disc, and semiconductor memory. Also, with a recording medium, the kind of removable media is also optional, and may be a tape device, may be a disk and may be a memory card. As a matter of course this may be a non-contact IC card or the like.

Also, an arrangement may be made where the media drive 968 and recording medium are integrated and, for example, are configured of a non-portable storage medium such as a built-in type hard disk drive or SSD (Solid State Drive) or the like.

The control unit 970 is configured using a CPU memory, and so forth. The memory stores programs to be stored by the CPU, and various types of data necessary for the CPU to perform processing. Programs stored in the memory are read out at predetermined timing such as at the time of startup of the imaging device 96 by the CPU, and are executed. The CPU controls each part so that operations of the imaging device 96 correspond to user operations, by executing the program.

With the imaging device thus configured, the image data processing unit 964 is provided with a function of the image encoding device (image encoding method) and the image decoding device (image decoding method) of the present application. Therefore, at the time of recording the imaging image to the memory unit 967 or a recording medium, improvement of encoding efficiency and image quality can be realized, and recording/playback of the imaging image can be performed efficiently.

Furthermore, the present invention is not to be interpreted as being restricted to the above-described embodiments. The embodiments are disclosed exemplarily, and it is clearly understood that one skilled in the art can accomplish modifications and a substitutions of the embodiments without departing from the essence of the present invention. That is, the Claims should be taken into consideration to judge the essence of the present invention.

Industrial Applicability

With the image decoding device and image encoding device and method thereof and programs thereof in this invention, in the decoding of the image, candidates of prediction motion vectors are set for a block to be decoded, using this block and motion vectors of adjacent blocks which have been decoded. Also, a motion vector indicated by prediction motion vector selecting information obtained by performing lossless decoding of an encoded stream is selected from candidates to be a prediction motion vector. The motion vector of the block to be decoded is calculated by adding the difference motion vector obtained by performing lossless decoding of this prediction motion vector and an encoded stream. Also, with the encoding of the image, candidates of prediction motion vectors are set for the block to be encoded, and a motion vector where the encoding efficiency is the best is selected from these candidates as a prediction motion vector. Also, encoding of a difference motion vector indicating the difference between the prediction motion vector and motion vector of the block to be encoded, and prediction motion vector selecting information which motion vector has been selected from the candidates, is performed. Therefore, the motion vector where the encoding efficiency is the best is selected from candidates of the prediction motion vector and is used, so reduction of code amount needed for the transmission of the motion vector is enabled, thereby improving encoding efficiency. Also, along with the reduction of the code amount needed for the transmission of the motion vector, raising the bit rate of the quantization data is enabled, thereby realizing improvement of the image quality. Therefore, as with MPEG, H.26x or the like, this is suitable of an image decoding device, image encoding device, and so forth, used at the time of transmitting and receiving image information (bit stream) obtained by performing encoding in increments of blocks via network media such as satellite broadcasting, cable TV, the Internet, cell phone and so forth, or at the time of processing on a storage medium such as an optical disc, a magnetic disk, and flash memory.

Reference Signs List

10 image encoding device
11 A/D conversion unit
12, 57 screen rearranging buffer
13, 166 subtraction unit
14 orthogonal transform unit
15 quantization unit
16 lossless encoding unit
17,51 storage buffer
18 rate control unit
21, 53 inverse quantization unit
22, 54 inverse orthogonal transform unit
23, 55, 526 addition unit
24, 56 deblocking filter
25, 61 frame memory
26, 62, 65, 946 selector
31,63 intra prediction unit
32 motion prediction/compensation unit
33 prediction image/optimal mode selecting unit
50 image decoding device
52 lossless decoding unit
58 D/A converting unit
64 motion compensation unit
90 television apparatus
92 cellular telephone
94 recording/playback device
96 imaging apparatus
161, 523 motion vector storage unit
162, 524 case classifying unit
165, 165a, 525, 525a motion vector selecting unit
167 first encoding processing unit
168 second encoding processing unit
521 first decoding processing unit
522 second decoding processing unit
901, 921 antenna
902, 941 tuner
903 demultiplexer
904,947 decoder
905 video signal processing unit
906 display unit
907 audio signal processing unit
908 speaker
909, 942, 966 external I/F
910, 931, 949, 970 control unit
911, 932, 971 user interface unit
912, 933, 972 bus
922 communication unit
923 audio codec
924 speaker
925 microphone
926 camera unit
927 image processing unit
928 multiplex separating unit

929 recording/playback unit
930 display unit
943 encoder
944 HDD unit
945 disk drive
948, 969 OSD unit
961 optical block
962 imaging unit
963 camera signal processing unit
964 image data processing unit
965 display unit
967 memory unit
968 media drive

**Claims**

1. An image decoding device comprising:

   a first decoding processing unit configured to obtain a difference motion vector by performing decoding of an encoded stream;
   a second decoding processing unit configured to obtain prediction motion vector selecting information by decoding the encoded stream;
   a motion vector selecting unit configured to set prediction motion vector candidates as to a block to be decoded, and select a motion vector, indicated in the prediction motion vector selecting information, from prediction motion vector candidates; and
   an adding unit configured to calculate a motion vector of the block to be decoded by adding the difference motion vector to the prediction motion vector.

2. The image decoding device according to Claim 1,
   wherein the motion vector selecting unit uses a motion vector of adjacent blocks which have been decoded, and which are adjacent to the block to be decoded, and sets candidates of the prediction motion vector.

3. The image decoding device according to Claim 2,
   wherein the second decoding processing unit decodes the encoded stream and obtains the size of the block to be decoded,
   and wherein the motion vector selecting unit performs case classifying according to the size of the block to be decoded, and sets candidates of the prediction motion vector for each case.

4. The image decoding device according to Claim 3,
   wherein, in the event that the size of the block to be decoded is larger, the motion vector selecting unit increases the number of candidates of the prediction motion vector as compared with a case where the block size is smaller.

5. The image decoding device according to Claim 2, further comprising:

   a case classifying unit configured to perform case classifying according to the difference of motion vectors of the adjacent blocks,
   wherein the motion vector selecting unit sets candidates of the prediction motion vector for each case distinguished at the case classifying unit.

6. The image decoding device according to Claim 5,
   wherein the motion vector selecting unit takes each motion vector where difference occurs which exceeds a threshold set beforehand, as a candidate of the prediction motion vector.

7. An image decoding method comprising:

   a process of obtaining a difference motion vector by decoding an encoded stream;
   a process of obtaining prediction motion vector selecting information by decoding the encoded stream;

a process of setting prediction motion vector candidates as to a block to be decoded, and selecting a motion vector, indicated in prediction motion vector selecting information, from prediction motion vector candidates; and
a process of calculating a motion vector of the block to be decoded by adding the difference motion vector to the prediction motion vector.

8. A program causing a computer to execute image decoding, the program causing the computer to execute:

a procedure of obtaining the difference motion vector by decoding an encoded stream;
a procedure of obtaining prediction motion vector selecting information by decoding the encoded stream;
a procedure of setting prediction motion vector candidates as to a block to be decoded, and selecting a motion vector, indicated in the prediction motion vector selecting information, from prediction motion vector candidates; and
a procedure of calculating a motion vector of the block to be decoded by adding the difference motion vector to the prediction motion vector.

9. An image encoding device comprising:

a motion vector selecting unit configured to set prediction motion vector candidates as to a block to be encoded, and select from the candidates a motion vector where encoding efficiency is best, as a prediction motion vector;
a first encoding processing unit configured to perform encoding of a difference motion vector indicating the difference between the prediction motion vector selected by the motion vector selecting unit and a motion vector of the block to be encoded; and
a second encoding processing unit configured to perform encoding of prediction motion vector selecting information indicating which motion vector has been selected from the prediction motion vector candidates.

10. The image encoding device according to Claim 9,
wherein the motion vector selecting unit uses motion vectors of adjacent blocks which have been decoded and which are adjacent to the block to be decoded, and sets candidates of the prediction motion vector.

11. The image encoding device according to Claim 10,
wherein the motion vector selecting unit performs case classifying according to the size of the block to be decoded, and sets candidates of the prediction motion vector for each case.

12. The image encoding device according to Claim 11,
wherein, in the event that the size of the block to be decoded is larger, the motion vector selecting unit increases the number of candidates of the prediction motion vector as compared with a case where the block size is smaller.

13. The image encoding device according to Claim 12,
wherein the motion vector selecting unit selectively uses a plurality of motion vectors of the adjacent blocks as the prediction motion vector candidates, and in the selection of motion vectors to serve as candidates, motion vectors of blocks apart from each other in the adjacent blocks are selected.

14. The image encoding device according to Claim 10, further comprising:

a case classifying unit configured to perform case classifying according to difference of the motion vectors of adjacent blocks,
wherein the motion vector selecting unit sets the prediction motion vector candidates for each case distinguished by the case classifying unit.

15. The image encoding device according to Claim 14,
wherein the motion vector selecting unit takes each motion vector where difference occurs which exceeds a threshold set beforehand, as a candidate of the prediction motion vector.

16. The image encoding device according to Claim 9,
wherein, in the event that the number of candidates of the prediction motion vector is a plurality, the second encoding processing unit performs encoding of the prediction motion vector selecting information indicating which motion vector has been selected from the candidates.

17. The image encoding device according to Claim 9,
wherein occurrence probability is calculated beforehand for each prediction motion vector candidate;
and wherein the second encoding processing unit reduces the code amount to be allocated for the prediction motion vector selecting information indicating a motion vector where occurrence probability is higher, as compared with the prediction motion vector selecting information indicating a motion vector where occurrence probability is lower.

18. An image decoding method comprising:

a process of setting prediction motion vector candidates as to a block to be encoded, and selecting from the candidates a motion vector where encoding efficiency is best, as a prediction motion vector;
a process of performing encoding of a difference motion vector indicating the difference between the selected prediction motion vector and a motion vector of the block to be encoded; and
a process of performing encoding of the prediction motion vector selecting information indicating which motion vector has been selected from the prediction motion vector candidates.

19. A program causing a computer to execute image decoding, the program causing the computer to execute:

a procedure of setting prediction motion vector candidates as to a block to be encoded, and selecting from the candidates a motion vector where the encoding efficiency is the best, as a prediction motion vector;
a procedure of performing encoding of a difference motion vector indicating the difference between the selected prediction motion vector and a motion vector of the block to be encoded; and
a procedure of performing encoding of the prediction motion vector selecting information indicating which motion vector has been selected from the prediction motion vector candidates.

# FIG. 1

(A)

MV_B    MV_C

MV_A

MVob (≈MV_md)

(B)

MV_B        MV_C

MV_md

MV_A        MVob

FIG. 2

# FIG. 3

(A)

MV_B    MV_C

MV_A

(B)

MV_B    MV_C

MV_A

(C)

MV_B

MV_C

MV_A

(D)

|  | FIRST CANDIDATE | SECOND CANDIDATE | THIRD CANDIDATE | FOURTH CANDIDATE |
|---|---|---|---|---|
| CASE S0 | MV_A (MV_md) |  |  |  |
| CASE S1 | MV_A | MV_C |  |  |
| CASE S2 | MV_A | MV_B | MV_C | MV_co |

FIG. 4

# FIG. 5

(A)

skip/direct64×64    ME64×64    ME64×32    ME32×64    P8×8, can be divided further

(B)

skip/direct32×32    ME32×32    ME32×16    ME16×32    P8×8, can be divided further

(C)

skip/direct16×16    ME16×16    ME16×8    ME8×16    P8×8, can be divided further

(D)

direct8×8    ME8×8    ME8×4    ME4×8    ME4×4

# FIG. 6

START
IMAGE ENCODING PROCESSING

↓ ST11

A/D
CONVERSION

↓ ST12

SCREEN
REARRANGING

↓ ST13

GENERATE PREDICTION
DIFFERENCE DATA

↓ ST14

ORTHOGONAL TRANSFORM
PROCESSING

↓ ST15

QUANTIZATION
PROCESSING

↓ ST16

INVERSE QUANTIZATION
PROCESSING

↓ ST17

INVERSE ORTHOGONAL
TRANSFORM PROCESSING

↓ ST18

GENERATE DECODED
IMAGE DATA

↓ ST19

FILTER
PROCESSING

ST20

STORAGE OF
DECODED IMAGE DATA

↓ ST21

PREDICTION
PROCESSING

↓ ST22

SELECT PREDICTED
IMAGE DATA

↓ ST23

LOSSLESS ENCODING
PROCESSING

↓ ST24

STORAGE
PROCESSING

↓ ST25

RATE CONTROL

↓

END

# FIG. 7

```
        ┌─────────────────────────┐
        │          START          │
        │   PREDICTION PROCESSING  │
        └─────────────────────────┘
                     │
                     ▼                    ST31
        ┌─────────────────────────────┐
        │  INTRA PREDICTION PROCESSING │
        └─────────────────────────────┘
                     │
                     ▼                    ST32
        ┌─────────────────────────────┐
        │  INTER PREDICTION PROCESSING │
        └─────────────────────────────┘
                     │
                     ▼
        ┌─────────────────────────┐
        │          RETURN          │
        └─────────────────────────┘
```

# FIG. 8

```
        ┌───────────────────────────────┐
        │             START             │
        │  INTRA PREDICTION PROCESSING  │
        └───────────────────────────────┘
                     │
                     ▼                    ST41
        ┌─────────────────────────────┐
        │      INTRA PREDICTION FOR    │
        │     EACH PREDICTION MODE     │
        └─────────────────────────────┘
                     │
                     ▼                    ST42
        ┌─────────────────────────────┐
        │   CALCULATE COST FUNCTION    │
        │      VALUE AS TO EACH        │
        │       PREDICTION MODE        │
        └─────────────────────────────┘
                     │
                     ▼                    ST43
        ┌─────────────────────────────┐
        │   DETERMINE OPTIMAL INTRA    │
        │       PREDICTION MODE        │
        └─────────────────────────────┘
                     │
                     ▼
        ┌─────────────────────────┐
        │          RETURN          │
        └─────────────────────────┘
```

# FIG. 9

```
        START
   INTER PREDICTION
      PROCESSING
```

ST51
```
DECIDE MOTION VECTOR
AND REFERENCE IMAGE AS TO
 EACH PREDICTION MODE
```

ST52
```
MOTION COMPENSATION AS TO
   EACH PREDICTION MODE
```

ST53
```
GENERATE MOTION VECTOR INFORMATION
    AS TO EACH PREDICTION MODE
```

ST54
```
CALCULATE COST FUNCTION
VALUE AS TO EACH INTER
   PREDICTION MODE
```

ST55
```
DECIDE OPTIMAL INTER
  PREDICTION MODE
```

```
RETURN
```

# FIG. 10

START ENCODING PROCESSING
REGARDING MOTION VECTOR

ST61
OBTAIN PREDICTION
BLOCK SIZE INFORMATION

ST62
IS CASE S0? — No

Yes

ST64
IS CASE S1? — No

Yes

ST63
DECIDE CANDIDATE
OF CASE S0 TO BE
PREDICTION MOTION
VECTOR

ST65
DECIDE CANDIDATE
OF CASE S1 TO BE
PREDICTION
MOTION VECTOR

ST67
DECIDE CANDIDATE
OF CASE S2 TO BE
PREDICTION
MOTION VECTOR

ST66
GENERATE
PREDICTION MOTION
VECTOR SELECTING
INFORMATION

ST68
GENERATE
PREDICTION MOTION
VECTOR SELECTING
INFORMATION

ST69
LOSSLESS ENCODING
PROCESSING

RETURN

FIG. 11

FIG. 12

FIG. 13

START
IMAGE DECODING PROCESSING

STORE
ENCODED STREAM — ST81

LOSSLESS DECODING
PROCESSING — ST82

INVERSE QUANTIZATION
PROCESSING — ST83

INVERSE ORTHOGONAL
TRANSFORM PROCESSING — ST84

GENERATE DECODING
IMAGE DATA — ST85

FILTER
PROCESSING — ST86

STORAGE
PROCESSING — ST87

PREDICTION
PROCESSING — ST88

SELECT PREDICTION
IMAGE DATA — ST89

REARRANGE
SCREENS — ST90

D/A
CONVERSION — ST91

END

# FIG. 14

START DECODING PROCESSING
REGARDING MOTION VECTOR

ST101
OBTAIN PREDICTION
BLOCK SIZE INFORMATION

ST102
IS CASE S0?

No — Yes

ST104
IS CASE S1?

No — Yes

ST103
DECIDE CANDIDATE
OF CASE S0 TO BE
PREDICTION MOTION
VECTOR

ST105
OBTAIN PREDICTION
MOTION VECTOR
SELECTING
INFORMATION

ST107
OBTAIN PREDICTION
MOTION VECTOR
SELECTING
INFORMATION

ST106
DECIDE
PREDICTION MOTION
VECTOR FROM
CANDIDATES OF
CASE S1

ST108
DECIDE
PREDICTION MOTION
VECTOR FROM
CANDIDATES OF
CASE S2

ST109
CALCULATING PROCESSING
OF MOTION VECTOR

RETURN

# FIG. 15

```
        ┌─────────────────────┐
        │  START PREDICTION    │
        │     PROCESSING       │
        └──────────┬──────────┘
                   │
                   ▼                    ST111
              ◇─────────────◇
             ╱ IS THE CURRENT ╲   No
            ◇  BLOCK INTRA     ◇──────────────┐
             ╲   ENCODED?     ╱                │
              ◇─────────────◇                 │
                   │ Yes                       │
                   │                           │
                   ▼          ST112            ▼          ST113
        ┌─────────────────────┐    ┌─────────────────────┐
        │  INTRA PREDICTION    │    │  INTER PREDICTION    │
        │     PROCESSING       │    │     PROCESSING       │
        └──────────┬──────────┘    └──────────┬──────────┘
                   │◄─────────────────────────┘
                   ▼
        ┌─────────────────────┐
        │      RETURN          │
        └─────────────────────┘
```

# FIG. 16

(A)

MV_B    MV_C

MV_A

(B)

MV_B    MV_C

MV_A

(C)

MV_B    MV_C

MV_A

(D)

MV_B    MV_C

MV_A

(D)

| | FIRST CANDIDATE | SECOND CANDIDATE | THIRD CANDIDATE |
|---|---|---|---|
| CASE M0 | MV_B | | |
| CASE M1 | MV_A | MV_C | |
| CASE M2 | MV_A | MV_C | |
| CASE M3 | MV_A | MV_B | MV_C |

FIG. 17

FIG. 18

START OTHER
ENCODING PROCESSING REGARDING
MOTION VECTOR

CALCULATE DIFFERENCE
OF MOTION VECTORS  ST121

ST122
MVD_AB<THRESHOLD?

No

Yes

ST123
MVD_BC<THRESHOLD?

No

Yes  ST124

DECIDE CANDIDATE
OF CASE M0 TO BE
PREDICTION
MOTION VECTOR

ST125

DECIDE PREDICTION
MOTION VECTOR FROM
CANDIDATES OF CASE M2

ST126

GENERATE PREDICTION
MOTION VECTOR
SELECTING INFORMATION

ST127
MVD_BC<THRESHOLD?

No

Yes  ST128

DECIDE PREDICTION
MOTION VECTOR FROM
CANDIDATES OF CASE M1

ST129

GENERATE PREDICTION
MOTION VECTOR
SELECTING INFORMATION

ST130

DECIDE PREDICTION
MOTION VECTOR FROM
CANDIDATES OF CASE M3

ST131

GENERATE PREDICTION
MOTION VECTOR
SELECTING INFORMATION

ST132

LOSSLESS ENCODING
PROCESSING

RETURN

# FIG. 19

FIG. 20

START OTHER
DECODING PROCESSING REGARDING
MOTION VECTOR

CALCULATE DIFFERENCE
OF MOTION VECTORS — ST141

ST142

MVD_AB<THRESHOLD?

No →

Yes ↓

ST143

MVD_BC<THRESHOLD?

No →

Yes ↓ ST144

DECIDE CANDIDATE
OF CASE M0 TO BE
PREDICTION
MOTION VECTOR

ST145

OBTAIN PREDICTION
MOTION VECTOR
SELECTING INFORMATION

ST146

DECIDE PREDICTION
MOTION VECTOR FROM
CANDIDATES OF CASE M2

ST147

MVD_BC<THRESHOLD?

Yes ST148    No →

OBTAIN PREDICTION
MOTION VECTOR
SELECTING INFORMATION

ST149

DECIDE PREDICTION
MOTION VECTOR FROM
CANDIDATES OF CASE M1

ST150

OBTAIN PREDICTION
MOTION VECTOR
SELECTING INFORMATION

ST151

DECIDE PREDICTION
MOTION VECTOR FROM
CANDIDATES OF CASE M3

ST152

MOTION VECTOR
CALCULATING PROCESSING

RETURN

# FIG. 21

MoD_DB     MoD_BC

↑       ↑

MVD_DB     MVD_BC

| MV_D ↗ | MV_B ↗ | MV_C ↗ |
|---|---|---|
| MV_A ↙ | | |

MVD_AD
↓
MoD_AD

MVD_CA
↓
MoD_CA

# FIG. 22

| CASE | MoD_AD | MVD_DB | MoD_BC | MoD_CA | FIRST CANDIDATE | SECOND CANDIDATE | THIRD CANDIDATE |
|---|---|---|---|---|---|---|---|
| m0 | 0 | 0 | 0 | 0 | MV_A | | |
| m8 | 1 | 0 | 0 | 0 | MV_A | MV_C | |
| m4 | 0 | 1 | 0 | 0 | MV_A | MV_C | |
| m2 | 0 | 0 | 1 | 0 | MV_A | | |
| m1 | 0 | 0 | 0 | 1 | MV_B | | |
| m9 | 1 | 0 | 0 | 1 | MV_A | MV_C | |
| m5 | 0 | 1 | 0 | 1 | MV_A | MV_C | |
| m3 | 0 | 0 | 1 | 1 | MV_A | MV_C | |
| m6 | 0 | 1 | 1 | 0 | MV_A | MV_B | |
| m10 | 1 | 0 | 1 | 0 | MV_A | MV_B | |
| m12 | 1 | 1 | 0 | 0 | MV_C | | |
| m7 | 0 | 1 | 1 | 1 | MV_A | MV_B | MV_C |
| m11 | 1 | 0 | 1 | 1 | MV_A | MV_B | MV_C |
| m13 | 1 | 1 | 0 | 1 | MV_A | MV_C | |
| m14 | 1 | 1 | 1 | 0 | MV_A | MV_B | |
| m15 | 1 | 1 | 1 | 1 | MV_A | MV_B | MV_C |

# FIG. 23

START
OTHER ENCODING PROCESSING
REGARDING MOTION VECTOR

ST161

CALCULATE DIFFERENCE OF
MOTION VECTORS

ST162

DECIDE MoD

ST163

CASE CLASSIFYING

ST164

DECIDE PREDICTION MOTION
VECTOR FROM CANDIDATES IN
DETERMINED CASE

ST165

GENERATE PREDICTION
MOTION VECTOR
SELECTING INFORMATION

ST166

LOSSLESS ENCODING
PROCESSING

RETURN

# FIG. 24

START
OTHER DECODING PROCESSING
REGARDING MOTION VECTOR

ST171
CALCULATE DIFFERENCE OF
MOTION VECTORS

ST172
DECIDE MoD

ST173
CASE CLASSIFYING

ST174
OBTAIN PREDICTION
MOTION VECTOR
SELECTING INFORMATION

ST175
DECIDE PREDICTION MOTION
VECTOR FROM CANDIDATES IN
DETERMINED CASE

ST176
MOTION VECTOR
CALCULATING PROCESSING

RETURN

# FIG. 25

|  | FIRST CANDIDATE | SECOND CANDIDATE | THIRD CANDIDATE |
|---|---|---|---|
| CASE M0 | MV_B | | |
| CASE M1 | MV_A (30%) | MV_C (70%) | |
| CASE M2 | MV_A (70%) | MV_C (30%) | |
| CASE M3 | MV_A (35%) | MV_B (35%) | MV_C (30%) |

FIG. 26

# FIG. 27

FIG. 28

FIG. 29

| 961 | 962 IMAGING UNIT | 963 CAMERA SIGNAL PROCESSING UNIT | 964 IMAGE DATA PROCESSING UNIT | 965 DISPLAY UNIT |

967 MEMORY UNIT

969 OSD UNIT

972

966 EXTERNAL I/F UNIT

970 CONTROL UNIT

971 USER I/F UNIT

96

968 MEDIA DRIVE

## INTERNATIONAL SEARCH REPORT

| International application No. |
|---|
| PCT/JP2011/062453 |

**A. CLASSIFICATION OF SUBJECT MATTER**
*H04N7/32*(2006.01)i

According to International Patent Classification (IPC) or to both national classification and IPC

**B. FIELDS SEARCHED**

Minimum documentation searched (classification system followed by classification symbols)
H04N7/32

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2009/051419 A2 (LG ELECTROMICS INC.), 23 April 2009 (23.04.2009), | 1-3,7-11,16, 18,19 |
| Y | claim 9; page 47, line 9 to page 58, line 25; | 17 |
| A | fig. 18 & JP 2011-501555 A     & US 2010/0220790 A & EP 2210421 A     & CN 101884219 A & KR 10-2010-0081984 A | 4-6,12-15 |
| Y | JP 2004-007778 A (Victor Company of Japan, Ltd.), | 17 |
| A | 08 January 2004 (08.01.2004), paragraphs [0002] to [0003] (Family: none) | 1-16,18,19 |

[X] Further documents are listed in the continuation of Box C.  [ ] See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15 July, 2011 (15.07.11) | 26 July, 2011 (26.07.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

<table>
<tr><td colspan="2" align="center">**INTERNATIONAL SEARCH REPORT**</td><td>International application No.<br>PCT/JP2011/062453</td></tr>
</table>

C (Continuation). DOCUMENTS CONSIDERED TO BE RELEVANT

| Category* | Citation of document, with indication, where appropriate, of the relevant passages | Relevant to claim No. |
|---|---|---|
| X<br><br>Y<br>A | WO 2006/019093 A1 (Nippon Telegraph and Telephone Corp.),<br>23 February 2006 (23.02.2006),<br>entire text; all drawings<br>& US 2007/0183499 A1 & EP 1781042 A1<br>& CN 1922888 A & KR 10-2006-0123561 A | 1,2,7-10,16,<br>18,19<br>17<br>3-6,11-15 |
| X<br><br>Y<br>A | JP 2006-352910 A (Thomson multimedia S.A.),<br>28 December 2006 (28.12.2006),<br>entire text; all drawings<br>& US 5905535 A & EP 707428 A1 | 1,2,7-10,16,<br>18,19<br>17<br>3-6,11-15 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006025033 A